(19) Europäisches Patentamt
European Patent Office
Office européen des brevets

(11) **EP 4 258 576 A1**

(12) **EUROPEAN PATENT APPLICATION**
published in accordance with Art. 153(4) EPC

(43) Date of publication:
**11.10.2023 Bulletin 2023/41**

(21) Application number: **21913848.4**

(22) Date of filing: **10.12.2021**

(51) International Patent Classification (IPC):
**H04L 1/00** (2006.01)    **H04L 5/00** (2006.01)

(52) Cooperative Patent Classification (CPC):
**H04L 1/00; H04L 1/16; H04L 5/00; H04W 72/54**

(86) International application number:
**PCT/CN2021/137193**

(87) International publication number:
**WO 2022/143107 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2020   CN 202011588889**

(71) Applicant: **Huawei Technologies Co., Ltd.**
**Shenzhen, Guangdong 518129 (CN)**

(72) Inventors:
• **SUN, Yingxiang**
**Shenzhen, Guangdong 518129 (CN)**
• **LIU, Chenchen**
**Shenzhen, Guangdong 518129 (CN)**
• **HAN, Xiao**
**Shenzhen, Guangdong 518129 (CN)**
• **DU, Rui**
**Shenzhen, Guangdong 518129 (CN)**
• **ZHANG, Meihong**
**Shenzhen, Guangdong 518129 (CN)**
• **YANG, Xun**
**Shenzhen, Guangdong 518129 (CN)**

(74) Representative: **Maiwald GmbH**
**Engineering**
**Elisenhof**
**Elisenstrasse 3**
**80335 München (DE)**

(54) **INFORMATION REPORTING METHOD, AND COMMUNICATION APPARATUS**

(57)    This application discloses an information reporting method and a communication apparatus. The method includes: A first wireless device sends a first frame to a second wireless device, where the first frame includes first indication information and/or second indication information, the first indication information indicates a configuration of a feedback parameter in an information feedback condition, the second indication information indicates the feedback parameter in the information feedback condition, and the feedback parameter in the information feedback condition is used by the second wireless device to determine whether the information feedback condition is met. The first wireless device sends a measurement packet to the second wireless device. The first wireless device receives first information sent by the second wireless device when the second wireless device determines that the information feedback condition is met. According to the method provided in this application, the second wireless device can feed back the first information to the first wireless device only when the feedback condition is met. This helps reduce information exchange between the second wireless device and the first wireless device, and helps save channel resources.

FIG. 6

## Description

This application claims priority to Chinese Patent Application No. 202011588889.1, filed with the China National Intellectual Property Administration on December 28, 2020 and entitled "INFORMATION REPORTING METHOD AND COMMUNICATION APPARATUS", which is incorporated herein by reference in its entirety.

## TECHNICAL FIELD

This application relates to the field of communication technologies, and in particular, to an information reporting method and a communication apparatus.

## BACKGROUND

With development of wireless-fidelity (wireless-fidelity, Wi-Fi), 4G, and 5G technologies, various wireless communication devices have been widely deployed in people's daily life. Such wireless communication devices include a mobile phone, a computer, a wireless router, a smart home device, a wireless sensor, a wireless router, and the like. There are a large quantity of such devices that are inexpensive and very close to a user. In a common home environment, more than ten or even more than a hundred of wireless devices are deployed around the user. A surrounding human body action may be sensed, or other information may be measured, based on channel information in a wireless communication process of these devices. Such a technology of sensing the human body action based on the channel information is referred to as a wireless sensing technology. According to a basic principle, the wireless sensing technology uses a principle similar to that of a "human body radar" to sense a surrounding human body.

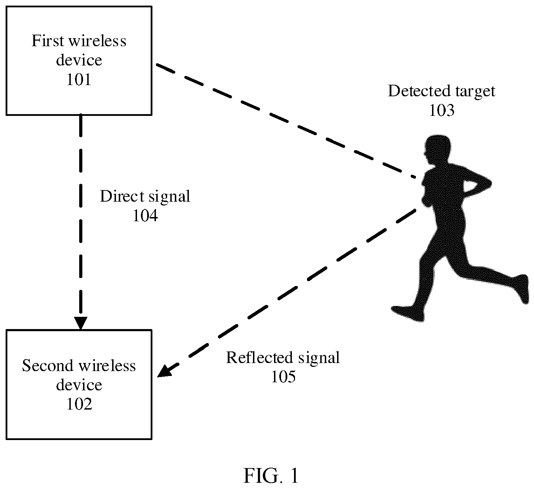

The wireless sensing technology is used as an example. As shown in FIG. 1, a wireless sensing system includes a first wireless device 101 and a second wireless device 102. In an actual system, there may be one or more first wireless devices and second wireless devices. In addition, the first wireless device and the second wireless device may be disposed in a same physical device. A wireless signal received by the second wireless device 102 includes a direct signal 104 and a reflected signal 105 reflected by a detected target 103. When the detected target 103 moves, the reflected signal 105 changes. In this way, a superimposed wireless signal received by the second wireless device 102 also changes accordingly. In this case, the second wireless device 102 detects that a channel of a wireless link changes. Generally, the channel of the wireless link is quantized and indicated by channel information in a communication protocol, for example, channel state information (channel state information, CSI). A change of the wireless channel is indicated by changes of an amplitude and a phase of the channel information. The channel information obtained through measurement by the second wireless device varies with time, so that it can be sensed whether there is a person moving around and which action is specifically being performed. Therefore, the wireless sensing technology may be widely applied to applications such as intrusion detection, elderly care, gesture recognition, breathing and sleep monitoring, and indoor head counting.

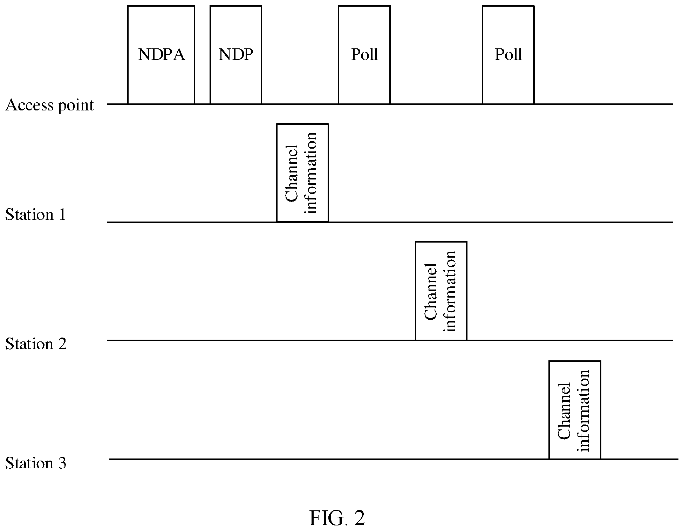

Currently, FIG. 2 shows a solution in which the first wireless device broadcasts a null data packet (null data packet, NDP) to enable all of a plurality of second wireless devices to perform channel measurement. In this solution, the first wireless device first sends a null data packet announcement (null data packet announcement, NDPA) message to notify the plurality of second wireless devices that channel measurement is to be performed. Subsequently, the first wireless device sends an NDP measurement packet, and all of the plurality of second wireless devices perform channel measurement. After the second wireless devices perform channel measurement, a 1st second wireless device notified by the NDPA performs channel information feedback. In this case, the second wireless device may select some channel information for feedback, or indicate, in the feedback, that a channel does not change. Then, the first wireless device sequentially requests, based on a poll message, other second wireless devices to perform channel information feedback, and the other second wireless devices sequentially perform feedback. In this solution, the plurality of second wireless devices are required to sequentially feed back whether channel information changes. Therefore, there is a large quantity of interaction, and a large quantity of channel resources need to be occupied.

## SUMMARY

This application provides an information reporting method and a communication apparatus, to help save channel resources.

According to a first aspect, this application provides an information reporting method. The method includes: A first wireless device sends a first frame to a second wireless device, where the first frame includes first indication information and/or second indication information, the first indication information indicates a configuration of a feedback parameter in an information feedback condition, the second indication information indicates the feedback parameter in the information feedback condition, and the feedback parameter in the information feedback condition is used by the second wireless device to determine whether the information feedback condition is met. The first wireless device sends a measurement packet to the second wireless device. The first wireless device receives first information sent by the second wireless device when the second wireless device determines that the information feedback condition is met.

According to the method described in the first aspect, the second wireless device can feed back the first information to the first wireless device only when the feedback condition is met. This helps reduce information exchange between the second wireless device and the first wireless device, and helps save channel resources.

In a possible implementation, the first information includes one of the following information: a measurement packet, channel information, compressed information of the channel information, or a wireless sensing measurement result.

Compared with feeding back the channel information, feeding back the measurement packet, the compressed information of the channel information, or the wireless sensing measurement result may save channel resources. Feeding back the measurement packet is applicable to a scenario in which a requirement for an information refresh rate is high, for example, intrusion detection, fall detection, and breathing and heartbeat detection. Feeding back the channel information is applicable to a scenario in which an information refresh rate is moderate or low, and a requirement for overheads (overheads) during feedback is low. Feeding back the compressed information of the channel information is applicable to a scenario in which a requirement for a refresh rate is low, information of a single channel change is limited, and wireless sensing requires information of a plurality of channel changes. In this case, in addition to a final wireless sensing measurement result, the first wireless device needs to perform other calculation, for example, gesture and action identification. In addition to determining a gesture and an action type, the first wireless device also needs to calculate an intermediate process quantity such as a range-Doppler plot. Feeding back the wireless sensing measurement result is applicable to a scenario in which a moderate or low refresh rate is required, for example, positioning and tracking. The first wireless device only needs to know the wireless sensing measurement result.

In a possible implementation, the first indication information indicates that the feedback parameter in the information feedback condition includes one or more of the following parameters: a channel information variation threshold, an accumulative channel change quantity threshold, or an accumulative measurement quantity threshold. Configuring the channel information variation threshold is conducive to reporting the first information only when a channel variation is large, thereby saving channel resources. Configuring the accumulative channel change quantity threshold is conducive to reporting the first information only when there are a plurality of channel changes, thereby reducing a quantity of interaction between the second wireless device and the first wireless device, and saving channel resources. Configuring the accumulative measurement quantity threshold is conducive to reporting the first information at least once at intervals, to prevent the first wireless device from failing to determine a status of the second wireless device when the channel information does not change for a long time.

In a possible implementation, when the feedback parameter in the information feedback condition includes the accumulative channel change quantity threshold and/or the accumulative measurement quantity threshold, the first information includes the channel information, the compressed information of the channel information, or the wireless sensing measurement result.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result. According to this possible implementation, the second wireless device may flexibly feed back information based on different application scenarios.

In a possible implementation, the first frame is a null data packet announcement NDPA frame, and the third indication information is located in a station information field of the NDPA frame. The third indication information is carried in the station information field, so that different information feedback manners are indicated for different second wireless devices.

In a possible implementation, the first frame is the null data packet announcement NDPA frame, and the first indication information and/or the second indication information are/is located in the station information field of the NDPA frame. The first indication information and/or the second indication information are/is carried in the station information field, so that different first indication information and/or second indication information are/is indicated for different second wireless devices.

In a possible implementation, the first frame further includes fourth indication information, and the fourth indication information indicates that the first frame is used to perform wireless sensing. According to this possible implementation, after receiving the first frame, the second wireless device can determine that a wireless sensing related procedure needs to be performed.

In a possible implementation, the first frame is the null data packet announcement NDPA frame. The fourth indication information is located in a frame control field of the NDPA frame, or the fourth indication information is located in the station information field of the NDPA frame. The fourth indication information is carried in the frame control field of the NDPA frame, and all second wireless devices can directly read the frame control field to learn that wireless sensing needs to be performed, so that bits in the station information field indicates other information. The fourth indication information is carried in the station information field of the NDPA frame, so that an indication can be accurately performed for each second wireless device.

In a possible implementation, that the fourth indication information is located in the frame control field of the NDPA frame is specifically as follows: The fourth indication information is located in a subtype subfield of the frame control field of the NDPA frame.

In a possible implementation, the fourth indication information is located in the station information field of the NDPA frame. The NDPA frame is a ranging (Ranging) NDPA frame. Alternatively, a value of an association identifier AID subfield in the station information field of the NDPA frame is a reserved value, and the AID subfield indicates that the station information field includes the fourth indication information.

In a possible implementation, the first information is the measurement packet or the channel information, and the first wireless device may further determine the wireless sensing measurement result based on the first information. According to this possible implementation, the first wireless device can accurately determine the wireless sensing measurement result.

In a possible implementation, the first information is the compressed information of the channel information, and the first wireless device may further recover the compressed information to obtain the channel information. The first wireless device determines the wireless sensing measurement result based on the channel information. According to this possible implementation, the first wireless device can accurately determine the wireless sensing measurement result.

In a possible implementation, the first wireless device may specifically recover the compressed information based on a machine learning model or a deep learning model, or according to a compressed sensing algorithm or a principal component analysis PCA algorithm, to obtain the channel information. According to this possible implementation, the first wireless device can accurately recover the channel information.

In a possible implementation, before the first wireless device sends the first frame to the second wireless device, the first wireless device may further send a second frame to the second wireless device. The second frame is used to query whether the second wireless device is idle. The first wireless device receives a clear to send CTS response frame that is sent by the second wireless device and that indicates that the second wireless device is idle. According to this possible implementation, the first wireless device can learn which second wireless devices are idle, to determine which second wireless devices are to send the first frame.

In another possible implementation, the first wireless device may neither send the second frame to the second wireless device nor receive the CTS response frame sent by the second wireless device, and all second wireless devices participate in channel measurement.

In a possible implementation, before receiving the first information sent by the second wireless device, the first wireless device may further perform the following steps: The first wireless device sends a third frame to the second wireless device, where the third frame is used to query whether the second wireless device meets the information feedback condition. The first wireless device receives a clear to send CTS response frame that is sent by the second wireless device and that indicates that the second wireless device meets the information feedback condition. The first wireless device sends a trigger frame to the second wireless device. The trigger frame is used to trigger the second wireless device to feed back the first information to the first wireless device. According to this possible implementation, the first wireless device can learn which second wireless devices meet the information feedback condition, to trigger the second wireless devices that meet the information feedback condition to feed back the first information.

In another possible implementation, the first wireless device does not need to send the third frame, receive the CTS response frame sent by the second wireless device, and send the trigger frame to the second wireless device. The second wireless device may determine whether the information feedback condition is met, and report the first information when the information feedback condition is met.

In a possible implementation, when the first information is the measurement packet, the trigger frame is a sounding (sounding) frame. Alternatively, when the first information is the channel information, the compressed information of the channel information, or the wireless sensing result, the trigger frame is a report (report) frame.

According to a second aspect, this application provides an information reporting method. The method includes: A second wireless device receives a first frame sent by a first wireless device, where the first frame includes first indication information and/or second indication information, the first indication information indicates a configuration of a feedback parameter in an information feedback condition, and the second indication information indicates the feedback parameter in the information feedback condition. The second wireless device measures a measurement packet sent by the first wireless device, to obtain channel information. The second wireless device obtains the feedback parameter in the information feedback condition based on the first indication information and/or the second indication information. The second wireless device determines, based on the feedback parameter in the information feedback condition and the channel information, whether the information feedback condition is met. If yes, the second wireless device sends first information to the first wireless device.

In a possible implementation, the first information includes one of the following information: a measurement packet, the channel information, compressed information of the channel information, or a wireless sensing measurement result obtained based on the channel information.

In a possible implementation, the first frame includes the first indication information. A specific implementation in which the second wireless device obtains the feedback parameter in the information feedback condition based on the first indication information and/or the second indication information is as follows: The second wireless device determines the configuration of the feedback parameter in the information feedback condition based on the first indication information. The second wireless device obtains the feedback parameter in the information feedback condition based on the configuration of the feedback parameter in the information feedback condition. According to this possible implementation, the second wireless device can accurately determine the feedback parameter in the information feedback condition.

In a possible implementation, the first frame further includes the first indication information and the second indication information. A specific implementation in which the second wireless device obtains the feedback parameter in the information feedback condition based on the first indication information and/or the second indication information is as follows: The second wireless device determines the configuration of the feedback parameter in the information feedback condition based on the first indication information. The second wireless device reads, based on the configuration of the feedback parameter in the information feedback condition, the feedback parameter in the information feedback condition indicated by the second indication information. According to this possible implementation, the second wireless device can accurately determine the feedback parameter in the information feedback condition.

In a possible implementation, the first indication information indicates that the feedback parameter in the information feedback condition includes one or more of the following parameters: a channel information variation threshold, an accumulative channel change quantity threshold, or an accumulative measurement quantity threshold.

In a possible implementation, when the feedback parameter in the information feedback condition includes the accumulative channel change quantity threshold and/or the accumulative measurement quantity threshold, the first information includes the channel information, the compressed information of the channel information, or the wireless sensing measurement result.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result. A specific implementation in which the second wireless device sends first information to the first wireless device is as follows: The second wireless device sends the first information to the first wireless device in the information feedback manner indicated by the third indication information.

In a possible implementation, the first frame is a null data packet announcement NDPA frame, and the third indication information is located in a station information field of the NDPA frame.

In a possible implementation, the first frame is the null data packet announcement NDPA frame, and the first indication information and/or the second indication information are/is located in the station information field of the NDPA frame.

In a possible implementation, the first frame further includes fourth indication information, and the fourth indication information indicates that the first frame is used to perform wireless sensing.

In a possible implementation, the first frame is the null data packet announcement NDPA frame. The fourth indication information is located in a frame control field of the NDPA frame, or the fourth indication information is located in the station information field of the NDPA frame.

In a possible implementation, that the fourth indication information is located in the frame control field of the NDPA frame is specifically: The fourth indication information is located in a subtype subfield of the frame control field of the NDPA frame.

In a possible implementation, the fourth indication information is located in the station information field of the NDPA frame. The NDPA frame is a ranging (Ranging) NDPA frame. Alternatively, a value of an association identifier AID subfield in the station information field of the NDPA frame is a reserved value, and the AID subfield indicates that the station information field includes the fourth indication information.

In a possible implementation, the first information is the compressed information of the channel information, and the second wireless device may further store the compressed information of the channel information. This facilitates the second wireless device to subsequently determine a channel information variation based on the stored compressed information of the channel information.

In a possible implementation, the second wireless device may compress the channel information according to a compressed sensing algorithm or a principal component analysis PCA algorithm to obtain the compressed information of the channel information. The compressed information of the channel information obtained according to the two algorithms helps reduce occupied channel resources.

In a possible implementation, the first information is the measurement packet, the channel information, or the wireless sensing measurement result, and the second wireless device may further store the channel information. This facilitates the second wireless device to subsequently determine a channel information variation based on the stored channel information.

In a possible implementation, before receiving the first frame sent by the first wireless device, the second wireless device may further receive a second frame sent by the first wireless device, where the second frame is used to query whether the second wireless device is idle. The second wireless device sends, to the first wireless device, a clear to send CTS response frame indicating that the second wireless device is idle.

In another possible implementation, the second wireless device may neither receive the second frame sent by the first wireless device nor send the CTS response frame to the first wireless device, and all second wireless devices participate in channel measurement.

In a possible implementation, before sending the first information to the first wireless device, the second wireless device may further receive a third frame sent by the first wireless device. The third frame is used to query whether the second wireless device meets the information feedback condition. If the second wireless device meets the information feedback condition, the second wireless device feeds back, to the first wireless device, a clear to send CTS response frame indicating that the second wireless device meets the information feedback condition. The second wireless device receives a trigger frame sent by the first wireless device. The trigger frame is used to trigger the second wireless device to feed back the first information to the first wireless device.

In another possible implementation, the second wireless device does not need to receive the third frame sent by the first wireless device, send the CTS response frame to the first wireless device, and receive the trigger frame sent by the first wireless device. The second wireless device may determine whether the information feedback condition is met, and report the first information when the information feedback condition is met.

In a possible implementation, when the first information is the measurement packet, the trigger frame is a sounding (sounding) frame. Alternatively, when the first information is the channel information, the compressed information of the channel information, or the wireless sensing result, the trigger frame is a report (report) frame.

In a possible implementation, the first indication information indicates that the feedback parameter in the information feedback condition includes the channel information variation threshold. A specific implementation in which the second wireless device determines, based on the feedback parameter in the information feedback condition and the channel information, whether the information feedback condition is met is as follows: The second wireless device determines the channel information variation based on the channel information. The second wireless device determines, based on the channel information variation and the channel information variation threshold, whether the information feedback condition is met. According to this possible implementation, the first information is reported only when the channel information variation is large, to reduce interaction between the second wireless device and the first wireless device, and save channel resources.

In a possible implementation, the feedback parameter in the information feedback condition includes the channel information variation threshold and the accumulative channel change quantity threshold. A specific implementation in which the second wireless device determines, based on the feedback parameter in the information feedback condition and the channel information, whether the information feedback condition is met is as follows: The second wireless device determines a channel information variation based on the channel information. The second wireless device determines an accumulative quantity of channel changes based on the channel information variation and the channel information variation threshold. The second wireless device determines, based on the accumulative quantity of channel changes and the accumulative channel change quantity threshold, whether the information feedback condition is met. According to this possible implementation, the first information is reported only once after a plurality of channel changes, to avoid frequently contending for a channel to obtain a TXOP for transmitting the first information, thereby reducing interaction between the second wireless device and the first wireless device, and reducing channel resources between the second wireless device and the first wireless device.

In a possible implementation, the feedback parameter in the information feedback condition includes the channel information variation threshold and the accumulative measurement quantity threshold. A specific implementation in which the second wireless device determines, based on the feedback parameter in the information feedback condition and the channel information, whether the information feedback condition is met is as follows: The second wireless device determines an accumulative quantity of measurements of the measurement packet. The second wireless device determines a channel information variation based on the channel information. The second wireless device determines, based on the channel information variation, the accumulative quantity of measurements, the channel information variation threshold, and the accumulative measurement quantity threshold, whether the information feedback condition is met. According to this possible implementation, the first information is reported at least once at intervals, to prevent the first wireless device from failing to determine a status of the second wireless device when the channel information does not change for a long time.

In a possible implementation, the feedback parameter in the information feedback condition includes the channel information variation threshold, the accumulative channel change quantity threshold, and the accumulative measurement quantity threshold. A specific implementation in which the second wireless device determines, based on the feedback parameter in the information feedback condition and the channel information, whether the information feedback condition is met is as follows: The second wireless device determines a channel information variation based on the channel information. The second wireless device determines an accumulative quantity of channel changes based on the channel information variation and the channel information variation threshold. The second wireless device determines an accumulative quantity of measurements of the measurement packet. The second wireless device determines, based on the accumulative quantity of channel changes, the accumulative quantity of measurements, the accumulative channel change quantity threshold, and the accumulative measurement quantity threshold, whether the information feedback condition is met. According to this possible implementation, the first information is reported at least once at intervals, to prevent the first wireless device from failing to determine the status of the second wireless device when the channel information does not change for a long time. This is conducive to reporting the first information only once after a plurality of channel changes, to avoid frequently contending for a channel to obtain a TXOP for transmitting the first information, thereby reducing interaction between the second wireless device and the first wireless device, and reducing channel resources between the second wireless device and the first wireless device.

For beneficial effect not mentioned in the second aspect, refer to the beneficial effect in the first aspect. Details are not described herein again.

According to a third aspect, this application provides a communication apparatus. The communication apparatus includes: a communication unit, configured to send a first frame to a second wireless device. The first frame includes first indication information and/or second indication information. The first indication information indicates a configuration of a feedback parameter in an information feedback condition. The second indication information indicates the feedback parameter in the information feedback condition. The feedback parameter in the information feedback condition is used by the second wireless device to determine whether the information feedback condition is met. The communication unit is further configured to send a measurement packet to the second wireless device. The communication unit is further configured to receive the first information sent by the second wireless device when determining that the information feedback condition is met.

In a possible implementation, the first information includes one of the following information: a measurement packet, channel information, compressed information of the channel information, or a wireless sensing measurement result.

In a possible implementation, the first indication information indicates that the feedback parameter in the information feedback condition includes one or more of the following parameters: a channel information variation threshold, an accumulative channel change quantity threshold, or an accumulative measurement quantity threshold.

In a possible implementation, when the feedback parameter in the information feedback condition includes the accumulative channel change quantity threshold and/or the accumulative measurement quantity threshold, the first information includes the channel information, the compressed information of the channel information, or the wireless sensing measurement result.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result.

In a possible implementation, the first frame is a null data packet announcement NDPA frame, and the third indication information is located in a station information field of the NDPA frame.

In a possible implementation, the first frame is the null data packet announcement NDPA frame, and the first indication information and/or the second indication information are/is located in the station information field of the NDPA frame.

In a possible implementation, the first frame further includes fourth indication information, and the fourth indication information indicates that the first frame is used to perform wireless sensing.

In a possible implementation, the first frame is the null data packet announcement NDPA frame. The fourth indication information is located in a frame control field of the NDPA frame, or the fourth indication information is located in the station information field of the NDPA frame.

In a possible implementation, that the fourth indication information is located in the frame control field of the NDPA frame is specifically: The fourth indication information is located in a subtype subfield of the frame control field of the NDPA frame.

In a possible implementation, the fourth indication information is located in the station information field of the NDPA frame. The NDPA frame is a ranging (Ranging) NDPA frame. Alternatively, a value of an association identifier AID subfield in the station information field of the NDPA frame is a reserved value, and the AID subfield indicates that the station information field includes the fourth indication information.

In a possible implementation, the first information is the measurement packet or the channel information, and the communication apparatus further includes a processing unit. The processing unit is configured to determine the wireless sensing measurement result based on the first information.

In a possible implementation, the first information is the compressed information of the channel information. The communication apparatus further includes a processing unit, configured to recover the compressed information to obtain the channel information. The processing unit is further configured to determine the wireless sensing measurement result based on the channel information.

In a possible implementation, a specific implementation in which the processing unit recovers the compressed information to obtain the channel information is as follows: The processing unit recovers the compressed information based on a machine learning model or a deep learning model, or according to a compressed sensing algorithm or a principal component analysis PCA algorithm, to obtain the channel information.

In a possible implementation, before the first wireless device sends the first frame to the second wireless device, the communication unit may be further configured to send a second frame to the second wireless device. The second frame is used to query whether the second wireless device is idle. The communication unit is further configured to receive a clear to send CTS response frame that is sent by the second wireless device and that indicates that the second wireless device is idle.

In a possible implementation, before the first wireless device receives the first information sent by the second wireless device, the communication unit is further configured to: send a third frame to the second wireless device, where the third frame is used to query whether the second wireless device meets the information feedback condition; receive a clear to send CTS response frame that is sent by the second wireless device and that indicates that the second wireless device meets the information feedback condition; and send a trigger frame to the second wireless device. The trigger frame is used to trigger the second wireless device to feed back the first information to the first wireless device.

In a possible implementation, when the first information is the measurement packet, the trigger frame is a sounding (sounding) frame. Alternatively, when the first information is the channel information, the compressed information of the channel information, or the wireless sensing result, the trigger frame is a report (report) frame.

According to a fourth aspect, this application provides a communication apparatus. The communication apparatus includes: a communication unit, configured to receive a first frame sent by a first wireless device, where the first frame includes first indication information and/or second indication information, the first indication information indicates a configuration of a feedback parameter in an information feedback condition, the second indication information indicates a feedback parameter in the information feedback condition, and the communication unit is further configured to measure a measurement packet sent by the first wireless device, to obtain channel information; and a processing unit, configured to obtain the feedback parameter in the information feedback condition based on the first indication information and/or the second indication information. The processing unit is further configured to determine, based on the feedback parameter in the information feedback condition and the channel information, whether the information feedback condition is met. The communication unit is further configured to send the first information to the first wireless device when the information feedback condition is met.

In a possible implementation, the first information includes one of the following information: a measurement packet, the channel information, compressed information of the channel information, or a wireless sensing measurement result obtained based on the channel information.

In a possible implementation, the first frame includes the first indication information. A specific implementation in which the processing unit obtains the feedback parameter in the information feedback condition based on the first indication information and/or the second indication information is as follows: The processing unit determines the configuration of the feedback parameter in the information feedback condition based on the first indication information. The processing unit obtains the feedback parameter in the information feedback condition based on the configuration of the feedback parameter in the information feedback condition.

In a possible implementation, the first frame further includes the first indication information and the second indication information. A specific implementation in which the processing unit obtains the feedback parameter in the information feedback condition based on the first indication information and/or the second indication information is as follows: The processing unit determines the configuration of the feedback parameter in the information feedback condition based on the first indication information. The processing unit reads, based on the configuration of the feedback parameter in the information feedback condition, the feedback parameter in the information feedback condition indicated by the second indication information.

In a possible implementation, the first indication information indicates that the feedback parameter in the information feedback condition includes one or more of the following parameters: a channel information variation threshold, an accumulative channel change quantity threshold, or an accumulative measurement quantity threshold.

In a possible implementation, when the feedback parameter in the information feedback condition includes the accumulative channel change quantity threshold and/or the accumulative measurement quantity threshold, the first information includes the channel information, the compressed information of the channel information, or the wireless sensing measurement result.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result. A specific implementation in which the communication unit sends first information to the first wireless device includes: The communication unit sends the first information to the first wireless device in the information feedback manner indicated by the third indication information.

In a possible implementation, the first frame is a null data packet announcement NDPA frame, and the third indication information is located in a station information field of the NDPA frame.

In a possible implementation, the first frame is the null data packet announcement NDPA frame, and the first indication information and/or the second indication information are/is located in the station information field of the NDPA frame.

In a possible implementation, the first frame further includes fourth indication information, and the fourth indication information indicates that the first frame is used to perform wireless sensing.

In a possible implementation, the first frame is the null data packet announcement NDPA frame. The fourth indication information is located in a frame control field of the NDPA frame, or the fourth indication information is located in the station information field of the NDPA frame.

In a possible implementation, that the fourth indication information is located in the frame control field of the NDPA frame is specifically: The fourth indication information is located in a subtype subfield of the frame control field of the NDPA frame.

In a possible implementation, the fourth indication information is located in the station information field of the NDPA frame. The NDPA frame is a ranging (Ranging) NDPA frame. Alternatively, a value of an association identifier AID subfield in the station information field of the NDPA frame is a reserved value, and the AID subfield indicates that the station information field includes the fourth indication information.

In a possible implementation, the first information is the compressed information of the channel information, and the processing unit may be further configured to store the compressed information of the channel information.

In a possible implementation, the processing unit may be further configured to compress the channel information according to a compressed sensing algorithm or a principal component analysis PCA algorithm to obtain the compressed information of the channel information.

In a possible implementation, the first information is the measurement packet, the channel information, or the wireless sensing measurement result, and the processing unit is further configured to store the channel information.

In a possible implementation, before receiving the first frame sent by the first wireless device, the communication unit is further configured to receive a second frame sent by the first wireless device. The second frame is used to query whether the second wireless device is idle. The communication unit is configured to send, to the first wireless device, a clear to send CTS response frame indicating that the second wireless device is idle.

In a possible implementation, before sending the first information to the first wireless device, the communication unit is further configured to receive a third frame sent by the first wireless device. The third frame is used to query whether the second wireless device meets the information feedback condition. If the information feedback condition is met, the communication unit is further configured to feed back, to the first wireless device, a clear to send CTS response frame indicating that the second wireless device meets the information feedback condition. The communication unit is further configured to receive a trigger frame sent by the first wireless device. The trigger frame is used to trigger the second wireless device to feed back the first information to the first wireless device.

In a possible implementation, when the first information is the measurement packet, the trigger frame is a sounding (sounding) frame. Alternatively, when the first information is the channel information, the compressed information of the channel information, or the wireless sensing result, the trigger frame is a report (report) frame.

In a possible implementation, the first indication information indicates that the feedback parameter in the information feedback condition includes the channel information variation threshold. A specific implementation in which the processing unit determines, based on the feedback parameter in the information feedback condition and the channel information, whether the information feedback condition is met is as follows: The processing unit determines the channel information variation based on the channel information. The processing unit determines, based on the channel information variation and the channel information variation threshold, whether the information feedback condition is met.

In a possible implementation, the feedback parameter in the information feedback condition includes the channel information variation threshold and the accumulative channel change quantity threshold. A specific implementation in which the processing unit determines, based on the feedback parameter in the information feedback condition and the channel information, whether the information feedback condition is met is as follows: The second wireless device determines a channel information variation based on the channel information. The second wireless device determines an accumulative quantity of channel changes based on the channel information variation and the channel information variation threshold. The second wireless device determines, based on the accumulative quantity of channel changes and the accumulative channel change quantity threshold, whether the information feedback condition is met.

In a possible implementation, the feedback parameter in the information feedback condition includes the channel information variation threshold and the accumulative measurement quantity threshold. A specific implementation in which the processing unit determines, based on the feedback parameter in the information feedback condition and the channel information, whether the information feedback condition is met is as follows: The second wireless device determines an accumulative quantity of measurements of the measurement packet. The second wireless device determines a channel information variation based on the channel information. The second wireless device determines, based on the channel information variation, the accumulative quantity of measurements, the channel information variation threshold, and the accumulative measurement quantity threshold, whether the information feedback condition is met.

In a possible implementation, the feedback parameter in the information feedback condition includes the channel information variation threshold, the accumulative channel change quantity threshold, and the accumulative measurement quantity threshold. A specific implementation in which the processing unit determines, based on the feedback parameter in the information feedback condition and the channel information, whether the information feedback condition is met is as follows: The second wireless device determines a channel information variation based on the channel information. The second wireless device determines an accumulative quantity of channel changes based on the channel information variation and the channel information variation threshold. The second wireless device determines an accumulative quantity of measurements of the measurement packet. The second wireless device determines, based on the accumulative quantity of channel changes, the accumulative quantity of measurements, the accumulative channel change quantity threshold, and the accumulative measurement quantity threshold, whether the information feedback condition is met.

According to a fifth aspect, this application provides a communication apparatus. The communication apparatus includes a processor. When the processor invokes a computer program in a memory, the method according to the first aspect or the second aspect is performed.

According to a sixth aspect, this application provides a communication apparatus. The communication apparatus includes a processor and a memory. The memory is configured to store computer-executable instructions. The processor is configured to execute the computer-executable instructions stored in the memory, to enable the communication apparatus to perform the method according to the first aspect or the second aspect.

According to a seventh aspect, this application provides a communication apparatus. The communication apparatus includes a processor, a memory, and a transceiver. The transceiver is configured to receive a signal or send a signal. The memory is configured to store program code. The processor is configured to invoke the program code from the memory to perform the method according to the first aspect or the second aspect.

According to an eighth aspect, this application provides a communication apparatus. The communication apparatus includes a processor and an interface circuit. The interface circuit is configured to receive code instructions and transmit the code instructions to the processor. The processor runs the code instructions to perform the method according to the first aspect or the second aspect.

According to a ninth aspect, an embodiment of this application provides a system. The system includes the communication apparatus provided in the third aspect or the fourth aspect.

According to a tenth aspect, this application provides a computer-readable storage medium. The computer-readable storage medium is configured to store instructions. When the instructions are executed, the method according to the first aspect or the second aspect is implemented.

According to an eleventh aspect, an embodiment of this application provides a computer program or a computer program product, including code or instructions. When the code is run or the instructions are run on a computer, the computer is enabled to perform the method according to the first aspect or the second aspect.

**BRIEF DESCRIPTION OF DRAWINGS**

FIG. 1 is a schematic diagram of an existing wireless sensing system;
FIG. 2 is a schematic flowchart of existing channel information feedback;
FIG. 3 is a schematic diagram of a system architecture according to an embodiment of this application;
FIG. 4 is a schematic diagram of an application scenario according to an embodiment of this application;
FIG. 5 is a schematic diagram of another application scenario according to an embodiment of this application;
FIG. 6 is a schematic flowchart of an information reporting method according to an embodiment of this application;
FIG. 7 is a schematic diagram of a structure of a first frame according to an embodiment of this application;
FIG. 8 is a schematic diagram of a structure of another first frame according to an embodiment of this application;
FIG. 9 is a schematic diagram of a structure of still another first frame according to an embodiment of this application;
FIG. 10 is a schematic diagram of a structure of yet another first frame according to an embodiment of this application;

FIG. 11 is a schematic diagram of a structure of still yet another first frame according to an embodiment of this application;

FIG. 12 is a schematic diagram of a structure of a further first frame according to an embodiment of this application;

FIG. 13 is a schematic flowchart of another information reporting method according to an embodiment of this application;

FIG. 14 is a schematic flowchart of still another information reporting method according to an embodiment of this application;

FIG. 15 is a schematic diagram of a structure of a communication apparatus according to an embodiment of this application; and

FIG. 16 is a schematic diagram of a structure of another communication apparatus according to an embodiment of this application.

## DESCRIPTION OF EMBODIMENTS

The following further describes specific embodiments of this application in detail with reference to accompanying drawings.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a specific feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one (item)" means one or more, "a plurality of" means two or more, "at least two (items)" means two or three or more. The term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

Embodiments of this application provide an information reporting method and a communication apparatus. The method provided in embodiments of this application is applied to a wireless-fidelity (wireless-fidelity, Wi-Fi) system. Certainly, the method provided in embodiments of this application may also be extended to a wireless cellular network, for example, an LTE or 5G system. The method may be implemented by a communication device or a chip or a processor in the communication device. In the Wi-Fi system, the communication device supports the 802. 1 The standard or a standard later than 802. 1 1be.

To better understand embodiments of this application, the following first describes a system architecture in embodiments of this application.

The system architecture in this application includes one or more first wireless devices and one or more second wireless devices. The first wireless device may be an access point (access point, AP) station, and the second wireless device may be a non-access point station (non-access point station, non-AP STA). For ease of description, the access point station is referred to as an access point (AP), and the non-access point station is referred to as a station (STA) in this specification. Alternatively, the first wireless device is an access point, and the second wireless device is also an access point. Alternatively, the first wireless device is a station, and the second wireless device is also a station. Alternatively, the first wireless device is a station, and the second wireless device is an access point. The second wireless device is configured to perform channel measurement, and feed back information to the first wireless device, so that the first wireless device can determine a wireless sensing result or determine information in another field based on the information fed back by the second wireless device.

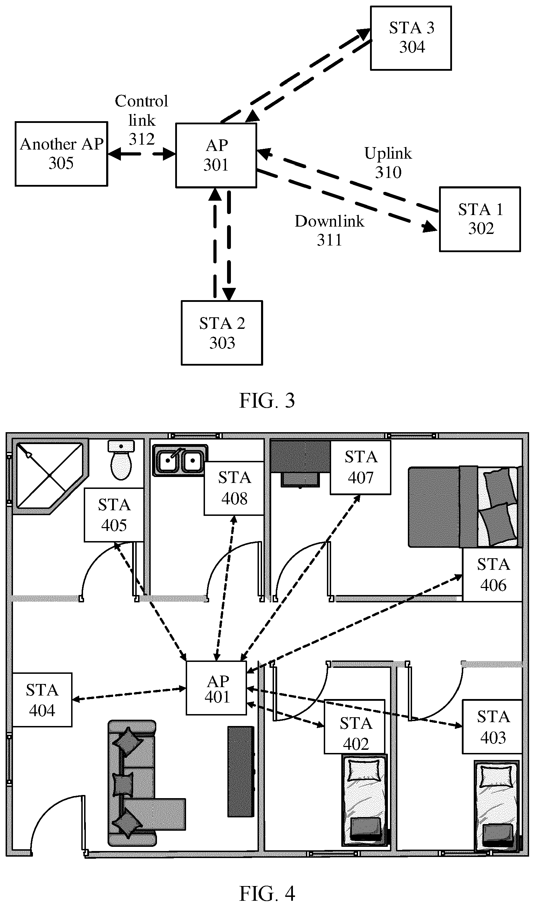

FIG. 3 is a schematic diagram of a system architecture according to an embodiment of this application. As shown in FIG. 3, for example, the first wireless device is an access point, and the second wireless device is a station.

The access point may be an access point used by a terminal device (such as a mobile phone) to access a wired (or wireless) network, and is mainly deployed at home, in a building, and in a park. A typical coverage radius is tens of meters to more than a hundred of meters. Certainly, the access point may alternatively be deployed outdoors.

The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a Wi-Fi chip. The access point may be a device that supports the 802. 1The standard or a standard later than 802. 11be.

The station may be a wireless communication chip, a wireless sensor, or a wireless communication terminal. For example, the station may be a mobile phone, a tablet computer, a set-top box, a smart television set, a smart wearable device, a vehicle-mounted communication device, a computer, or the like that supports a Wi-Fi communication function.

The access point and the station interact with each other by using a wireless network protocol, for example, a Wi-Fi protocol. The access point may send a downlink measurement packet to coordinate the station to perform channel measurement. The station may feed back information to the access point based on a measurement result, so that the access point determines wireless sensing or information in another field based on the information fed back by the station. A link that is sent by the station and received by the access point is referred to as an uplink, for example, an uplink 310 in FIG. 3. A link that is sent by the access point and received by the station is referred to as a downlink, for example, a downlink 311 in FIG. 3. The access point may interact with another access point over a control link 312. The control link 312 may be connected in a wired Ethernet manner or a wireless network manner, and is mainly used to coordinate different access points to perform monitoring simultaneously.

The information reporting method provided in embodiments of this application may be used to perform wireless sensing or measure other information. A technology of sensing a human body action based on channel information is referred to as a wireless sensing technology. The wireless sensing in this specification may also be referred to as wireless passive sensing. An application scenario of the information reporting method provided in embodiments of this application includes a plurality of scenarios. For example, two typical scenarios are an application scenario in a home environment and an application scenario in an industrial and commercial environment. FIG. 4 shows the application scenario in the home environment. For example, the information reporting method provided in embodiments of this application is used to perform wireless sensing, the first wireless device is an AP, and the second wireless device is a STA. When the method is applied in the home environment, an AP 401 may be deployed. The node may perform measurement interaction with a plurality of STAs 402 to 408 in the figure, to monitor the entire home environment. For example, a link between the AP 401 and the STA 405 may be used to measure an action condition in a bathroom. If a sliding action is detected, the AP may send an alarm in time to notify medical personnel. A link between the AP 401 and the STA 404 may be used to measure an action condition in a living room. If a gesture motion is detected, the AP may control a light switch, television channel switching, and the like. In addition, the AP 401 and the STA 402, the STA 403, and the STA 406 in a bedroom may also detect a sleep status of a user.

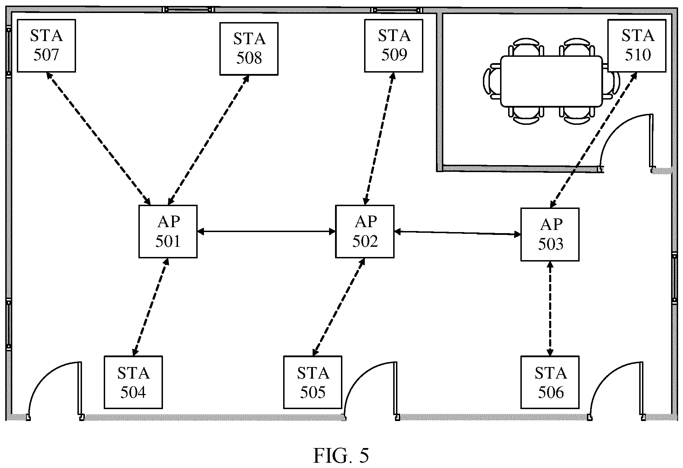

FIG. 5 shows the typical application scenario in the industrial and commercial environment. For example, the information reporting method provided in embodiments of this application is used for wireless sensing, the first wireless device is an AP, and the second wireless device is a STA. In an office scenario, there is a large to-be-monitored area, and a plurality of APs may be used. As shown in the figure, 501, 502, and 503 are all APs. Each AP interacts with one or more STAs to complete measurement on a specific area. For example, a link between the AP 501 and a STA 504 may be used to monitor an entry and exit condition at a door. A link between the AP 503 and a STA 510 may be used to collect statistics on a conference room occupation status and a quantity of conference participants.

The following further describes the information reporting method and the communication apparatus that are provided in this application.

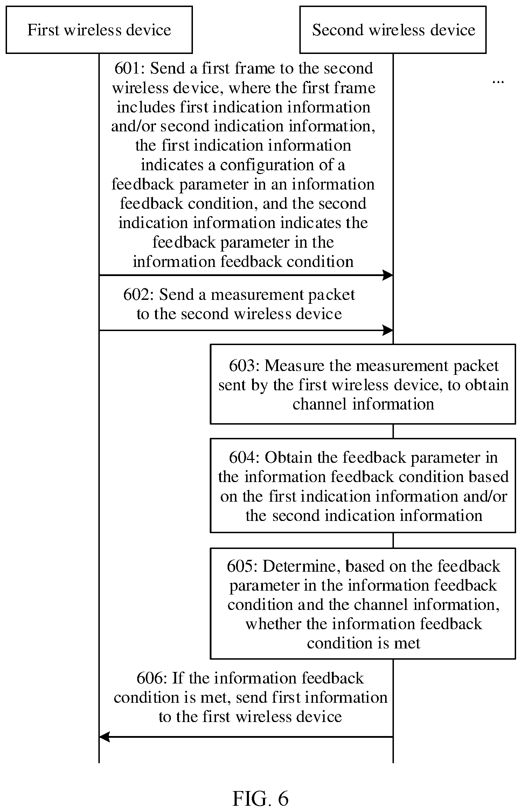

FIG. 6 is a schematic flowchart of an information reporting method according to an embodiment of this application. As shown in FIG. 6, the information reporting method includes the following step 601 to step 606. The method shown in FIG. 6 may be performed by a first wireless device and a second wireless device. Alternatively, the method shown in FIG. 6 may be performed by a chip in the first wireless device and a chip in the second wireless device. FIG. 6 is described by using an example in which the method is performed by the first wireless device and the second wireless device.

601: The first wireless device sends a first frame to the second wireless device, where the first frame includes first indication information and/or second indication information, the first indication information indicates a configuration of a feedback parameter in an information feedback condition, and the second indication information indicates the feedback parameter in the information feedback condition.

In this embodiment of this application, the first wireless device may send the first frame to one or more second wireless devices. The first wireless device may be scheduled to send the first frame to the one or more second wireless devices, or the first wireless device may broadcast the first frame, so that the one or more second wireless devices can receive the first frame. The first frame may be a null data packet announcement (null data packet announcement, NDPA) frame, or may be replaced by another similar message.

In this embodiment of this application, the first frame includes first indication information, or the first frame includes second indication information, or the first frame includes the first indication information and the second indication information. The first indication information indicates a configuration of a feedback parameter in an information feedback condition. In other words, the first indication information indicates which feedback parameters are included in the information feedback condition. The second indication information indicates the feedback parameter in the information feedback condition. In other words, the second indication information indicates a value of the feedback parameter in the information feedback condition.

For example, the first frame includes the first indication information and the second indication information. When the first indication information indicates that the feedback parameter in the information feedback condition includes a channel information variation threshold, the second indication information indicates that the channel information variation threshold is X1. When the first indication information indicates that the feedback parameter in the information feedback condition includes the channel information variation threshold and an accumulative channel change quantity threshold, the second indication information indicates that the channel information variation threshold is X1, and the accumulative channel change quantity threshold is Y1.

In a possible implementation, the first indication information indicates that the feedback parameter in the information feedback condition includes one or more of the following parameters: the channel information variation threshold, the accumulative channel change quantity threshold, or an accumulative measurement quantity threshold.

For example, the first indication information indicates that the feedback parameter in the information feedback condition includes the channel information variation threshold. Alternatively, the first indication information indicates that the feedback parameter in the information feedback condition includes the accumulative channel change quantity threshold. Alternatively, the first indication information indicates that the feedback parameter in the information feedback condition includes the accumulative measurement quantity threshold. Alternatively, the first indication information indicates that the feedback parameter in the information feedback condition includes the channel information variation threshold and the accumulative channel change quantity threshold. Alternatively, the first indication information indicates that the feedback parameter in the information feedback condition includes the channel information variation threshold and the accumulative measurement quantity threshold. Alternatively, the first indication information indicates that the feedback parameter in the information feedback condition includes the accumulative channel change quantity threshold and the accumulative measurement quantity threshold. Alternatively, the first indication information indicates that the feedback parameter in the information feedback condition includes the channel information variation threshold, the accumulative channel change quantity threshold, and the accumulative measurement quantity threshold.

Optionally, the channel information variation threshold may be a value or an interval. If the channel information variation threshold is the value, when a channel information variation is greater than or equal to the channel information variation threshold, it indicates that the channel information variation is large. Alternatively, when a channel information variation is less than or equal to the channel information variation threshold, it indicates that the channel information variation is large. If the channel information variation threshold is the interval, when a channel information variation is in the interval, it indicates that the channel information variation is large. Alternatively, when a channel information variation is not in the interval, it indicates that the channel information variation is large.

Configuring the channel information variation threshold is conducive to reporting first information only when the channel variation is large, thereby saving channel resources. Configuring the accumulative channel change quantity threshold is conducive to reporting the first information only when there are a plurality of channel changes, thereby reducing a quantity of interaction between the second wireless device and the first wireless device, and saving channel resources. Configuring the accumulative measurement quantity threshold is conducive to reporting the first information at least once at intervals, to prevent the first wireless device from failing to determine a status of the second wireless device when the channel information does not change for a long time.

In this embodiment of this application, the first indication information may indicate the configuration of the feedback parameter in the information feedback condition by using one or more bits.

For example, as shown in Table 1, the first indication information may be two bits. When a value of the first indication information is 00, it indicates that the feedback parameter in the information feedback condition includes the channel information variation threshold. When a value of the first indication information is 01, it indicates that the feedback parameter in the information feedback condition includes the channel information variation threshold and the accumulative channel change quantity threshold. When a value of the first indication information is 10, it indicates that the feedback parameter in the information feedback condition includes the channel information variation threshold and the accumulative measurement quantity threshold. When a value of the first indication information is 11, it indicates that the feedback parameter in the information feedback condition includes the channel information variation threshold, the accumulative channel change quantity threshold, and the accumulative measurement quantity threshold. It should be understood that a correspondence between the value of the first indication information and the feedback parameter in the information feedback condition shown in Table 1 is merely an example. There may be another mapping relationship between the value of the first indication information and the feedback parameter in the information feedback condition. Examples are not provided herein.

**Table 1**

| Value of the first indication information | Feedback parameter in the information feedback condition |
|---|---|
| 00 | Channel information variation threshold |
| 01 | Channel information variation threshold and accumulative channel change quantity threshold |
| 10 | Channel information variation threshold and accumulative measurement quantity threshold |
| 11 | Channel information variation threshold, accumulative channel change quantity threshold, and accumulative measurement quantity threshold |

For another example, as shown in Table 2, the first indication information may be three bits. When a value of the first indication information is 000, it indicates that the feedback parameter in the information feedback condition includes the channel information variation threshold. When a value of the first indication information is 001, it indicates that the feedback parameter in the information feedback condition includes the accumulative channel change quantity threshold. When a value of the first indication information is 010, it indicates that the feedback parameter in the information feedback condition includes the accumulative measurement quantity threshold. When a value of the first indication information is 011, it indicates that the feedback parameter in the information feedback condition includes the channel information variation threshold and the accumulative channel change quantity threshold. When a value of the first indication information is 100, it indicates that the feedback parameter in the information feedback condition includes the channel information variation threshold and the accumulative measurement quantity threshold. When a value of the first indication information is 101, it indicates that the feedback parameter in the information feedback condition includes the accumulative channel change quantity threshold and the accumulative measurement quantity threshold. When a value of the first indication information is 110, it indicates that the feedback parameter in the information feedback condition includes the channel information variation threshold, the accumulative channel change quantity threshold, and the accumulative measurement quantity threshold. A value 111 of the first indication information is a reserved value, and may subsequently indicate a configuration of another feedback parameter.

**Table 2**

| Value of the first indication information | Feedback parameter in the information feedback condition |
|---|---|
| 000 | Channel information variation threshold |
| 001 | Accumulative channel change quantity threshold |
| 010 | Accumulative measurement quantity threshold |
| 011 | Channel information variation threshold and accumulative channel change quantity threshold |
| 100 | Channel information variation threshold and accumulative measurement quantity threshold |
| 101 | Accumulative channel change quantity threshold, and accumulative measurement quantity threshold |
| 110 | Channel information variation threshold, accumulative channel change quantity threshold, and accumulative measurement quantity threshold |
| 111 | Reserved |

It should be understood that a correspondence between the value of the first indication information and the feedback parameter in the information feedback condition shown in Table 2 is merely an example. There may be another mapping relationship between the value of the first indication information and the feedback parameter in the information feedback condition. Examples are not provided herein.

In this embodiment of this application, the second indication information may also indicate a value of the feedback parameter in the information feedback condition by using one or more bits. The second indication information may indicate only the value of the feedback parameter in the information feedback condition. Alternatively, when the first frame includes the first indication information, in addition to the feedback parameter in the feedback condition, the second indication information may further indicate a value of a parameter other than the feedback parameter in the information feedback condition.

For example, the second indication information indicates only the value of the feedback parameter in the information feedback condition. It is assumed that the feedback parameter in the information feedback condition includes the channel information variation threshold and the accumulative channel change quantity threshold. The second indication information may include four bits. A first bit and a second bit of the second indication information indicate a value of the channel information variation threshold. A third bit and a fourth bit of the second indication information indicate a value of the accumulative channel change quantity threshold. For example, the first bit and the second bit of the second indication information indicate the value of the channel information variation threshold. As shown in the following Table 3, when a value of the first bit and the second bit of the second indication information is 00, it indicates that the value of the channel information variation threshold is X1. When a value of the first bit and the second bit of the second indication information is 01, it indicates that the value of the channel information variation threshold is X2. When a value of the first bit and the second bit of the second indication information is 10, it indicates that the value of the channel information variation threshold is X3. When a value of the first bit and the second bit of the second indication information is 11, it indicates that the value of the channel information variation threshold is X4.

Table 3

| Value of the first bit and the second bit of the second indication information | Value of the channel information variation threshold (X) |
| --- | --- |
| 00 | X1 |
| 01 | X2 |
| 10 | X3 |
| 11 | X4 |

It should be understood that a correspondence between the value of the first bit and the second bit of the second indication information and the value (X) of the channel information variation threshold shown in Table 3 is merely an example. There may be another mapping relationship between the value of the first bit and the second bit of the second indication information and the value (X) of the channel information variation threshold. Examples are not provided herein.

Alternatively, the second indication information uses four bits to jointly indicate the value of the channel information variation threshold and the value of the accumulative channel change quantity threshold. As shown in Table 4, when a value of the second indication information is 0000, it indicates that the value of the channel information variation threshold is X1 and the value of the accumulative channel change quantity threshold is Y1. When a value of the second indication information is 0001, it indicates that the value of the channel information variation threshold is X1 and the value of the accumulative channel change quantity threshold is Y2. When a value of the second indication information is 0010, it indicates that the value of the channel information variation threshold is X2 and the value of the accumulative channel change quantity threshold is Y1. When a value of the second indication information is 0011, it indicates that the value of the channel information variation threshold is X2 and the value of the accumulative channel change quantity threshold is Y2. Values 0100 to 1111 of the second indication information are reserved values, and may subsequently indicate other values of the channel information variation threshold and the accumulative channel change quantity threshold.

Table 4

| Value of the second indication information | Value (X) of the channel information variation threshold and value (Y) of the accumulative channel change quantity threshold |
| --- | --- |
| 0000 | X1 and Y1 |
| 0001 | X1 and Y2 |
| 0010 | X2 and Y1 |
| 0011 | X2 and Y2 |

(continued)

| Value of the second indication information | Value (X) of the channel information variation threshold and value (Y) of the accumulative channel change quantity threshold |
|---|---|
| 0100 to 1111 | Reserved |

It should be understood that a correspondence between the value of the second indication information and the value (X) of the channel information variation threshold and the value (Y) of the accumulative channel change quantity threshold shown in Table 4 is merely an example. There may be another mapping relationship between the value of the second indication information and the value (X) of the channel information variation threshold and the value (Y) of the accumulative channel change quantity threshold. Examples are not provided herein.

For another example, the second indication information further indicates a value of a parameter other than the feedback parameter in the information feedback condition. It is assumed that the first indication information indicates that the feedback parameter in the information feedback condition includes the channel information variation threshold and the accumulative channel change quantity threshold. The second indication information may include six bits. A first bit and a second bit of the second indication information indicate the value of the channel information variation threshold. A third bit and a fourth bit of the second indication information indicate the value of the accumulative channel change quantity threshold. A fifth bit and a sixth bit of the second indication information indicate a value of the accumulative measurement quantity threshold. Alternatively, the second indication information uses the six bits to jointly indicate the value of the channel information variation threshold, the value of the accumulative channel change quantity threshold, and the value of the accumulative measurement quantity threshold. After receiving the first frame, the second wireless device reads, based on the configuration of the feedback parameter in the information feedback condition, only the value of the information variation threshold indicated by the second indication information and the accumulative channel change quantity threshold, and determines, based on the value of the information variation threshold and the accumulative channel change quantity threshold, whether the information feedback condition is met.

In a possible implementation, the first frame is an NDPA frame, and the first indication information and/or the second indication information are/is located in the station information field of the NDPA frame. One or more station information fields may include first indication information and/or second indication information. When the station information fields include the first indication information and/or the second indication information, the first indication information and/or the second indication information in different station information fields are/is used for different second wireless devices. The first indication information in different station information fields may be the same or different, and/or the second indication information in different station information fields may be the same or different. The first indication information and/or the second indication information are/is carried in the station information fields, so that different first indication information and/or second indication information are/is indicated for different second wireless devices.

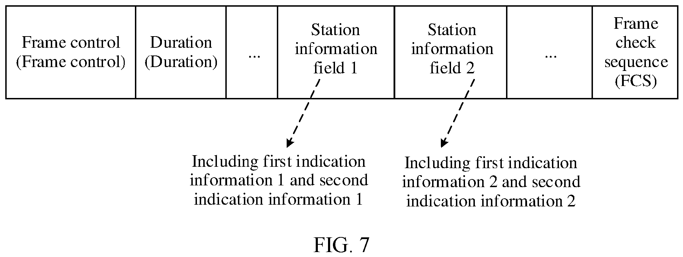

For example, the first wireless device is an access point, and the second wireless device is a station. As shown in FIG. 7, an NDPA frame includes a station information field 1 and a station information field 2. The station information field 1 carries first indication information 1 and second indication information 1 for a station 1, and the station information field 2 carries first indication information 2 and second indication information 2 for a station 2. The first indication information 1 and the first indication information 2 may be the same or different. The second indication information 1 and the second indication information 2 may be the same or different. The indication information in FIG. 7 may also include only the first indication information or only the second indication information.

Optionally, the first indication information includes a subfield of the station information field. The second indication information includes one or more subfields of the station information field. When the second indication information indicates values of a plurality of feedback parameters, the second indication information may include a plurality of subfields. Different subfields indicate values of different feedback parameters. In other words, the values of different feedback parameters are indicated by using different bits.

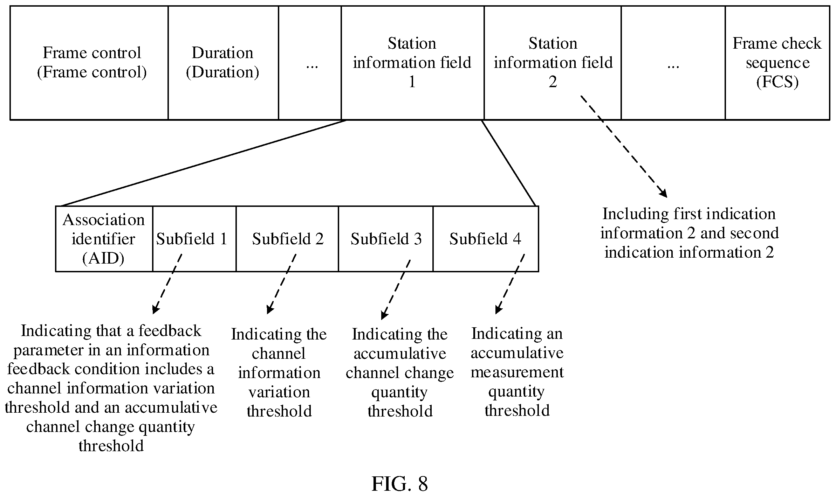

For example, the first wireless device is an access point, the second wireless device is a station, and first indication information and second indication information are located in a station information field of the NDPA frame. As shown in FIG. 8, the first indication information 1 includes a subfield 1 in the station information field 1, and the second indication information 1 includes a subfield 2, a subfield 3, and a subfield 4 in the station information field 1. The subfield 1 indicates that a feedback parameter in an information feedback condition includes a channel information variation threshold and an accumulative channel change quantity threshold. The subfield 2 indicates the channel information variation threshold, the subfield 3 indicates the accumulative channel change quantity threshold, and the subfield 4 indicates an accumulative measurement quantity threshold. After receiving the NDPA frame, the station 1 reads, based on the configuration of the feedback parameter in the information feedback condition indicated by the subfield 1, the channel information variation threshold indicated by the subfield 2 and the accumulative channel change quantity threshold indicated by the subfield 3, and determines, based on the channel information variation threshold and the indicated accumulative channel change quantity threshold, whether the information feedback condition is met. Alternatively, the second indication information 1 may include only a subfield 2 and a subfield 3.

Alternatively, when the second indication information indicates values of a plurality of feedback parameters, the second indication information includes only one subfield, and all bits of the subfield jointly indicate the values of the plurality of feedback parameters.

In another possible implementation, the first indication information and/or the second indication information may also be located in another field of the NDPA frame, for example, in a frame control field of the NDPA frame. When the first indication information and/or the second indication information are/is located in the frame control field of the NDPA frame, different second wireless devices use the same first indication information and/or second indication information.

602: The first wireless device sends a measurement packet to the second wireless device.

In this embodiment of this application, after sending the first frame to the second wireless device, the first wireless device sends the measurement packet to the second wireless device. The first wireless device may be scheduled to send the measurement packet to one or more second wireless devices, or the first wireless device may broadcast the measurement packet, so that the one or more second wireless devices can measure the measurement packet. The measurement packet may be a null data packet (null data packet, NDP), or may be a sounding physical layer protocol data unit (sounding physical layer protocol data unit, sounding PPDU) or another data packet that includes a training symbol.

603: The second wireless device measures the measurement packet sent by the first wireless device, to obtain channel information.

In this embodiment of this application, after receiving the first frame, the second wireless device measures the measurement packet sent by the first wireless device, to obtain the channel information. The channel information may be channel state information (channel state information, CSI). Alternatively, the channel information may be a part of the CSI.

604: The second wireless device obtains the feedback parameter in the information feedback condition based on the first indication information and/or the second indication information.

In this embodiment of this application, after receiving the first frame, the second wireless device obtains the feedback parameter in the information feedback condition based on the first indication information and/or the second indication information. Step 603 and step 604 are not sequentially performed, and the step 603 may be performed before the step 604. Alternatively, the step 604 may be performed first, and then the step 603 is performed.

In this embodiment of this application, if the first frame carries the first indication information, the second wireless device specifically obtains the feedback parameter in the information feedback condition based on the first indication information. If the first frame carries the second indication information, the second wireless device specifically obtains the feedback parameter in the information feedback condition based on the second indication information. If the first frame carries the first indication information and the second indication information, the second wireless device specifically obtains the feedback parameter in the information feedback condition based on the first indication information and the second indication information.

In a possible implementation, if the first frame carries the first indication information. A specific implementation in which the second wireless device obtains the feedback parameter in the information feedback condition based on the first indication information is as follows: The second wireless device determines the configuration of the feedback parameter in the information feedback condition based on the first indication information. The second wireless device obtains the feedback parameter in the information feedback condition based on the configuration of the feedback parameter in the information feedback condition. According to this possible implementation, the second wireless device can accurately determine the feedback parameter in the information feedback condition.

For example, the second wireless device pre-stores the channel information variation threshold X1, the accumulative channel change quantity threshold Y1, and an accumulative measurement quantity threshold Z1. It is assumed that the first indication information indicates that the feedback parameter in the information feedback condition includes the channel information variation threshold and the accumulative channel change quantity threshold, the second wireless device obtains the stored channel information variation threshold X1 and the stored accumulative channel change quantity threshold Y1, and determines, based on the channel information variation threshold X1 and the accumulative channel change quantity threshold Y1, whether the information feedback condition is met.

In a possible implementation, if the first frame further carries the first indication information and the second indication information. A specific implementation in which the second wireless device obtains the feedback parameter in the information feedback condition based on the first indication information and the second indication information is as follows: The second wireless device determines the configuration of the feedback parameter in the information feedback condition based on the first indication information. The second wireless device reads, based on the configuration of the feedback parameter in the information feedback condition, the feedback parameter in the information feedback condition indicated by the second indication information. According to this possible implementation, the second wireless device can accurately determine the feedback parameter in the information feedback condition.

For example, as shown in FIG. 8, it is assumed that the first indication information 1 indicates that the feedback parameter in the information feedback condition includes the channel information variation threshold and the accumulative channel change quantity threshold. The second indication information 1 includes the subfield 2, the subfield 3, and the subfield 4 in the station information field 1. The subfield 2 indicates the channel information variation threshold, the subfield 3 indicates the accumulative channel change quantity threshold, and the subfield 4 indicates the accumulative measurement quantity threshold. The second wireless device reads, based on the configuration of the feedback parameter in the information feedback condition, the channel information variation threshold indicated by the subfield 2 and the accumulative channel change quantity threshold indicated by the subfield 3, and determines, based on the channel information variation threshold and the accumulative channel change quantity threshold, whether the information feedback condition is met.

605: The second wireless device determines, based on the feedback parameter in the information feedback condition and the channel information, whether the information feedback condition is met.

In this embodiment of this application, after obtaining the feedback parameter in the information feedback condition based on the first indication information and/or the second indication information, the second wireless device determines, based on the feedback parameter in the information feedback condition and the channel information obtained through measurement, whether the information feedback condition is met. If the information feedback condition is met, step 606 is performed. In other words, the first information is sent to the first wireless device. If the information feedback condition is not met, the first information is not sent to the first wireless device.

The following describes several specific implementations in which the second wireless device determines, based on the feedback parameter in the information feedback condition and the channel information, whether the information feedback condition is met.

(1) The feedback parameter in the information feedback condition includes the channel information variation threshold. A specific implementation in which the second wireless device determines, based on the feedback parameter in the information feedback condition and the channel information, whether the information feedback condition is met is as follows: The second wireless device determines the channel information variation based on the channel information obtained through measurement. The second wireless device determines, based on the channel information variation and the channel information variation threshold, whether the information feedback condition is met.

The second wireless device stores last channel information obtained through measurement by the second wireless device. The second wireless device may compare current channel information obtained through measurement with the last channel information obtained through measurement, to obtain the channel information variation. Alternatively, the second wireless device stores compressed information of the last channel information obtained through measurement by the second wireless device. The second wireless device may compress the current channel information obtained through measurement. The second wireless device compares compressed information of the current channel information obtained through measurement with compressed information of the last channel information obtained through measurement, to obtain the channel information variation.

It is assumed that the channel information variation threshold is $\Delta_{Var\_th}$ and the channel information variation is $\Delta_{Var}$. If $\Delta_{Var}$ is greater than or equal to $\Delta_{Var\_th}$, it indicates that the channel information variation is large. In this case, when $\Delta_{Var}$ is greater than or equal to $\Delta V_{ar\_th}$, the second wireless device determines that the information feedback condition is met. When $\Delta_{Var}$ is less than $\Delta_{Var\_th}$, the second wireless device determines that the information feedback condition is not met.

If $\Delta_{Var}$ is less than or equal to $\Delta_{Var\_th}$, it indicates that the channel information variation is large. In this case, when $\Delta V_{ar}$ is less than or equal to $\Delta_{Var\_th}$, the second wireless device determines that the information feedback condition is met. When $\Delta_{Var}$ is greater than $\Delta_{Var\_th}$, the second wireless device determines that the information feedback condition is not met.

For another example, it is assumed that the channel information variation threshold is an interval [X1, X2]. If $\Delta_{Var}$ is in the interval [X1, X2], it indicates that the channel information variation is large. In this case, when $\Delta_{Var}$ is in the interval [X1, X2], the second wireless device determines that the information feedback condition is met. When $\Delta_{Var}$ is not in the interval [X1, X2], the second wireless device determines that the information feedback condition is not met.

If $\Delta_{Var}$ is not in the interval [X1, X2], it indicates that the channel information variation is large. In this case, when $\Delta_{Var}$ is not in the interval [X1, X2], the second wireless device determines that the information feedback condition is met. When $\Delta_{Var}$ is in the interval [X1, X2], the second wireless device determines that the information feedback condition is not met.

According to the specific implementation (1), the first information is reported only when the channel information variation is large, to reduce interaction between the second wireless device and the first wireless device, and save channel resources.

Optionally, when the feedback parameter in the information feedback condition includes only the channel information variation threshold, the first information includes one of the following information: a measurement packet, current channel information obtained through measurement, compressed information of the current channel information obtained through measurement, or a current wireless sensing measurement result obtained through measurement.

(2) The feedback parameter in the information feedback condition includes the channel information variation threshold and the accumulative channel change quantity threshold. A specific implementation in which the second wireless device determines, based on the feedback parameter in the information feedback condition and the channel information, whether the information feedback condition is met is as follows: The second wireless device determines a channel information variation based on the channel information obtained through measurement. The second wireless device determines an accumulative quantity of channel changes based on the channel information variation and the channel information variation threshold. The second wireless device determines, based on the accumulative quantity of channel changes and the accumulative channel change quantity threshold, whether the information feedback condition is met.

For how the second wireless device determines the channel information variation based on the channel information obtained through measurement, refer to the description in the implementation (1). Details are not described herein again. If the second wireless device determines, based on the channel information variation and the channel information variation threshold, that the channel information variation is large, the second wireless device adds 1 to the accumulative quantity of channel changes. If the second wireless device determines, based on the channel information variation and the channel information variation threshold, that the channel information variation is small, the second wireless device does not change the accumulative quantity of channel changes. For how to determine, based on the channel information variation and the channel information variation threshold, whether the channel information variation is large, refer to the description in the implementation (1). Details are not described herein again.

After determining the accumulative quantity of channel changes, the second wireless device determines whether the accumulative quantity of channel changes is equal to the accumulative channel change quantity threshold. If yes, the second wireless device determines that the information feedback condition is met. If no, the second wireless device determines that the information feedback condition is not met. When it is determined that the information feedback condition is met, the second wireless device sends the first information to the first wireless device, clears the accumulative quantity of channel changes, and restarts counting.

According to the specific implementation (2), the first information is reported only once after a plurality of channel changes, to avoid frequently contending for a channel to obtain a TXOP for transmitting the first information, thereby reducing interaction between the second wireless device and the first wireless device, and reducing channel resources between the second wireless device and the first wireless device.

Optionally, when the feedback parameter in the information feedback condition includes the channel information variation threshold and the accumulative channel change quantity threshold, the first information includes one of the following information: current channel information obtained through measurement, compressed information of the current channel information obtained through measurement, or a current wireless sensing measurement result obtained through measurement.

(3) The feedback parameter in the information feedback condition includes the channel information variation threshold and the accumulative measurement quantity threshold. A specific implementation in which the second wireless device determines, based on the feedback parameter in the information feedback condition and the channel information, whether the information feedback condition is met is as follows: The second wireless device determines an accumulative quantity of measurements of the measurement packet. The second wireless device determines a channel information variation based on the channel information obtained through measurement. The second wireless device determines, based on the channel information variation, the accumulative quantity of measurements, the channel information variation threshold, and the accumulative measurement quantity threshold, whether the information feedback condition is met.

For how the second wireless device determines the channel information variation based on the channel information obtained through measurement, refer to the description in the implementation (1). Details are not described herein again. If it is determined, based on the channel information variation and the channel information variation threshold, that the channel information variation is large, or the accumulative quantity of measurements is equal to the accumulative measurement quantity threshold, it is determined that the information feedback condition is met. If it is determined, based on channel information variation and channel information variation threshold, that the channel information variation is small, and the accumulative quantity of measurements is less than the accumulative measurement quantity threshold, it is determined that the information feedback condition is not met. For how to determine, based on the channel information variation and the channel information variation threshold, whether the channel information variation is large, refer to the description in the implementation (1). Details are not described herein again.

When it is determined that the information feedback condition is met, the second wireless device sends the first information to the first wireless device, clears the accumulative quantity of measurements, and restarts counting.

According to the specific implementation (3), the first information is reported at least once at intervals, to prevent the first wireless device from failing to determine the status of the second wireless device when the channel information does not change for a long time.

Optionally, when the feedback parameter in the information feedback condition includes the channel information variation threshold and the accumulative measurement quantity threshold, the first information includes one of the following information: current channel information obtained through measurement, compressed information of the current channel information obtained through measurement, or a current wireless sensing measurement result obtained through measurement.

(4) The feedback parameter in the information feedback condition includes the channel information variation threshold, the accumulative channel change quantity threshold, and the accumulative measurement quantity threshold. A specific implementation in which the second wireless device determines, based on the feedback parameter in the information feedback condition and the channel information, whether the information feedback condition is met is as follows: The second wireless device determines a channel information variation based on the channel information obtained through measurement. The second wireless device determines an accumulative quantity of channel changes based on the channel information variation and the channel information variation threshold. The second wireless device determines an accumulative quantity of measurements of the measurement packet. The second wireless device determines, based on the accumulative quantity of channel changes, the accumulative quantity of measurements, the accumulative channel change quantity threshold, and the accumulative measurement quantity threshold, whether the information feedback condition is met.

If the accumulative quantity of channel changes is equal to the accumulative channel change quantity threshold or the accumulative quantity of measurements is equal to the accumulative measurement quantity threshold, the second wireless device meets the information feedback condition. If the accumulative quantity of channel changes is less than the accumulative channel change quantity threshold, and the accumulative quantity of measurements is less than the accumulative measurement quantity threshold, the second wireless device does not meet the information feedback condition.

For how the second wireless device determines the accumulative quantity of channel changes based on the channel information variation and the channel information variation threshold, refer to the description in the implementation (2). Details are not described herein again.

According to the specific implementation (4), the first information is reported at least once at intervals, to prevent the first wireless device from failing to determine the status of the second wireless device when the channel information does not change for a long time. This is conducive to reporting the first information only once after a plurality of channel changes, to avoid frequently contending for a channel to obtain a TXOP for transmitting the first information, thereby reducing interaction between the second wireless device and the first wireless device, and reducing channel resources between the second wireless device and the first wireless device.

Optionally, when the feedback parameter in the information feedback condition includes the channel information variation threshold, the accumulative channel change quantity threshold, and the accumulative measurement quantity threshold, the first information includes one of the following information: current channel information obtained through measurement, compressed information of the current channel information obtained through measurement, or a current wireless sensing measurement result obtained through measurement.

(5) The feedback parameter in the information feedback condition includes the channel information variation threshold and the accumulative measurement quantity threshold. A specific implementation in which the second wireless device determines, based on the feedback parameter in the information feedback condition and the channel information, whether the information feedback condition is met is as follows: The second wireless device determines the accumulative quantity of measurements of the measurement packet. The second wireless device determines whether the accumulative quantity of measurements reaches the accumulative measurement quantity threshold $N_{mea\_th}$. If yes, the information feedback condition is met. If no, the information feedback condition is not met.

Optionally, if the information feedback condition is met, and at least one of $N_{mea\_th}$ measurements has a large channel variation, channel information with the large channel information variation in the $N_{mea\_th}$ measurements is fed back. Alternatively, a compression result of the channel information with the large channel information variation in the $N_{mea\_th}$ measurements is fed back. Alternatively, a wireless sensing measurement result obtained when a channel information variation in the $N_{mea\_th}$ measurements is large is fed back. If the information feedback condition is met, and a quantity of measurements that are in the $N_{mea\_th}$ measurements and that have large channel variations is zero, current channel information obtained through measurement, a compression result of the current channel information obtained through measurement, or a current wireless sensing measurement result obtained through measurement is fed back.

The second wireless device may determine a channel information variation based on channel information, and determine, based on the channel information variation and the channel information variation threshold, whether the channel information variation is large. For how to determine, based on the channel information variation and the channel information variation threshold, whether the channel information variation is large, refer to the description in the foregoing implementation (1). Details are not described herein again.

606: If the information feedback condition is met, the second wireless device sends the first information to the first wireless device.

Correspondingly, if the second wireless device meets the information feedback condition, the first wireless device may receive the first information sent by the second wireless device. The first information may be used by the first wireless device to determine a wireless sensing measurement result or used for information measurement in another field.

In a possible implementation, the first information includes one of the following information: a measurement packet, channel information, compressed information of the channel information, or a wireless sensing measurement result obtained based on the channel information. The measurement packet may be an NDP, a sounding PPDU, or another data packet that includes a training symbol.

Compared with feeding back the channel information, feeding back the measurement packet, the compressed information of the channel information, or the wireless sensing measurement result may save channel resources. Feeding back the measurement packet is applicable to a scenario in which a requirement for an information refresh rate is high, for example, intrusion detection, fall detection, and breathing and heartbeat detection. Alternatively, feeding back the measurement packet is further applicable to another scenario. This is not limited in this embodiment of this application. Feeding back the channel information is applicable to a scenario in which an information refresh rate is moderate or low, and a requirement for overheads (overheads) during feedback is low. Alternatively, feeding back the channel information is further applicable to another scenario. This is not limited in this embodiment of this application. Feeding back the compressed information of the channel information is applicable to a scenario in which a requirement for a refresh rate is low, information of a single channel change is limited, and wireless sensing requires information of a plurality of channel changes. In this case, in addition to a final wireless sensing measurement result, the first wireless device needs to perform other calculation, for example, gesture and action identification. In addition to determining a gesture and an action type, the first wireless device also needs to calculate an intermediate process quantity such as a range-Doppler plot. Alternatively, feeding back the compressed information of the channel information is further applicable to another scenario. This is not limited in this embodiment of this application. Feeding back the wireless sensing measurement result is applicable to a scenario in which a moderate or low refresh rate is required, for example, positioning and tracking. The first wireless device only needs to know the wireless sensing measurement result. Alternatively, feeding back the wireless sensing measurement result is further applicable to another scenario. This is not limited in this embodiment of this application.

In a possible implementation, if the first information is the measurement packet, the channel information, or the wireless sensing measurement result, the second wireless device further stores the channel information after measuring the channel information, so that the second wireless device subsequently determines a channel information variation based on the stored channel information.

In a possible implementation, if the first information is the compressed information of the channel information, after measuring the channel information, the second wireless device further needs to compress the channel information to obtain the compressed information of the channel information. The second wireless device may further store the compressed information of the channel information, so that the second wireless device subsequently determines the channel information variation based on the stored compressed information of the channel information.

In a possible implementation, the second wireless device may compress the channel information according to a compressed sensing algorithm or a PCA algorithm to obtain the compressed information of the channel information. The compressed information of the channel information obtained according to the two algorithms helps reduce occupied channel resources.

The following describes a principle of compressing channel information according to the compressed sensing algorithm or the principal component analysis (PCA) algorithm.

1. The compressed sensing algorithm is used to compress the channel information

A compressed sensing theory avoids a complex process of sampling before compression in a conventional method, and implements the two processes of sampling and compression in the conventional method by using an observation matrix, to effectively use resources, and improve efficiency of signal obtaining and transmission. A formula of the compressed sensing algorithm is shown in formula (1):

$$Y = \phi X = \phi \psi S = \Theta S \quad (1)$$

$X = \psi S$ , and $\Theta = \phi \psi$. $X = \psi S$ indicates that a signal X is decomposed into a sparse transform base $\psi$, and in transform domain including the sparse transform base, the signal X has sparsity. According to sparsity of X in specific transform domain, $\psi$ may be a Fourier transform base, a discrete cosine transform base, a wavelet transform base, an orthogonal transform base, or the like. Alternatively, the sparse transform base that meets a performance requirement may be calculated. X and S are different representation manners of a signal in time domain and in $\psi$ domain, and are essentially equivalent.

A measurement value Y is an (M×1)-dimensional compressed matrix. In other words, Y is compressed information of the channel information. $\phi$ is an (M×N)-dimensional measurement matrix. X is an (N×1)-dimensional channel information matrix. In other words, X is to-be-compressed channel information. $\psi$ is an (N×N)-dimensional sparse transform base or a sparse transform matrix, S is an (N×1)-dimensional sparse coefficient, and $\Theta$ is an (M×N)-dimensional perception matrix.

Because the measurement matrix $\Theta$ may be calculated according to a deterministic measurement matrix construction method in a construction method of the measurement matrix, the measurement matrix $\Theta$ does not need to be stored. Because the sparse transform base $\psi$ needs to be determined before compression, $\psi$ does not need to be stored. The first wireless device only needs to store and feed back the (M×1)-dimensional compressed matrix Y to the second wireless device. A compressed ratio (compressed ratio, CR) of information obtained according to the compressed sensing algorithm is CR=M/N.

2. The PCA algorithm is used to compress the channel information

The PCA algorithm transforms original data into a group of linear independent representations of each dimension through linear transformation. The PCA algorithm can be used to extract a principal feature component (a principal component) of data and is usually used for dimensionality reduction of high-dimensional data. Dimensionality reduction minimizes an association between reserved dimensions and maximizes a variance (namely, energy) of the reserved dimensions. A formula of the PCA algorithm is shown in formula (2):

$$Y = X\overline{\psi} \quad (2)$$

Y is (a×c)-dimensional compressed low-dimensional channel information, X is (a×b)-dimensional high-dimensional channel information before compression, a represents a quantity of samples (channel information), b represents a sample dimension, $\overline{\psi}$ is a (b×c)-dimensional compression matrix (or referred to as a projection matrix) (c<b), and includes c most significant feature vectors (namely, principal components) selected from all b feature vectors.

It is assumed that b feature values sorted in descending order of significance are $\lambda_1$, $\lambda_2$, ..., and $\lambda_b$. When an accumulative contribution $\dfrac{\sum_{i=1}^{c} \lambda_i}{\sum_{j=1}^{b} \lambda_j}$ is greater than a percentage $\gamma\%$ less than 1, for example, $\dfrac{\sum_{i=1}^{c} \lambda_i}{\sum_{j=1}^{b} \lambda_j} > \gamma\% = 95\%$, information included in the b feature vectors accounts for more than $\gamma\%$ of information included in all feature vectors. In this case, an information loss caused by dimensionality reduction is acceptable, and an information compression ratio meets CR=c/b.

The b feature vectors may be obtained by performing feature decomposition on a (b×b)-dimensional covariance matrix S of X. The covariance matrix S may simultaneously present an association between different dimensions and a variance in each dimension. An element on a principal diagonal is a variance (namely, energy) in each dimension, and another element is a covariance (namely, an association) between every two dimensions.

$$S = Cov(X,X) = XX^H = \psi \Lambda \psi^H \quad (3)$$

A is a (b×b)-dimensional diagonal matrix, and a diagonal element of the diagonal matrix is a feature value. $\psi$ is a (b×b)-dimensional feature matrix, and includes all of the b feature vectors. In this policy, the first wireless device needs to store and feed back compressed information Y and a compression matrix $\overline{\psi}$ to the second wireless device.

In a possible implementation, if the first information is a measurement packet, the first wireless device may measure the measurement packet sent by the second wireless device, to obtain channel information. The first wireless device may determine a wireless sensing measurement result based on the channel information obtained through measurement. If this solution is applied to another application scenario, the first wireless device may determine other information based on the channel information.

In a possible implementation, if the first information is channel information, after the first wireless device receives the channel information, the first wireless device may determine a wireless sensing measurement result based on the channel information. If this solution is applied to another application scenario, after the first wireless device receives the channel information, the first wireless device may determine other information based on the channel information.

In a possible implementation, if the first information is compressed information of the channel information, after receiving the compressed information of the channel information, the first wireless device recovers the compressed information to obtain the channel information. The first wireless device may determine a wireless sensing measurement result based on the channel information. If this solution is applied to another application scenario, the first wireless device may determine other information based on the channel information.

Optionally, the first wireless device recovers the compressed information based on a machine learning model or a deep learning model, or according to a compressed sensing algorithm or a PCA algorithm, to obtain the channel information. The following describes a principle of recovering compressed information of channel information based on a machine learning model or a deep learning model, or according to a compressed sensing algorithm and a PCA algorithm.

1. The compressed information of the channel information is recovered based on the machine learning model or the deep learning model.

Compressed channel information Y and channel information X before compression are used as training data, to train a machine learning model or a deep learning model (for example, a neural network model). A trained machine learning model or deep learning model is deployed at the first wireless device. When receiving the compressed information of the channel information sent by the second wireless device, the first wireless device inputs the compressed information of the channel information into the machine learning model or the deep learning model. The machine learning model or the deep learning model may output recovered channel information. The compressed channel information in this recovery policy may be obtained according to the compressed sensing algorithm or the PCA algorithm.

2. The compressed information of the channel information is recovered according to the compressed sensing algorithm.

A main idea of compressed sensing signal reconstruction is to calculate a sparse coefficient S according to a reconstruction algorithm from a measurement value Y (that is, compressed channel information fed back by the second wireless device to the first wireless device). A measurement matrix and a sparse transform base are known, a sparse coefficient may be obtained according to formula (4), and then an original signal X is obtained according to formula (5).

$$\hat{S} = \left( \phi \psi \right)^{\dagger} Y \quad (4)$$

$$\hat{X} = \psi \hat{S} \quad (5)$$

$\hat{s}$ is a recovered ($N \times 1$)-dimensional sparse coefficient S, $\phi$ is an ($M \times N$)-dimensional measurement matrix, $\psi$ is an ($N \times N$)-dimensional sparse orthogonal base $\psi$, $(.)^{\dagger}$ is Moore-Penrose pseudoinverse (moore-penrose pseudoinverse), Y is ($M \times 1$)-dimensional compressed channel information, and $\hat{X}$ is recovered ($N \times 1$)-dimensional channel information. The compressed channel information in this recovery policy is obtained according to the compressed sensing algorithm.

3. The compressed information of the channel information is recovered according to the PCA algorithm.

The compressed channel information in this recovery policy is obtained according to the PCA algorithm. An original signal X may be obtained according to formula (6):

$$\hat{X} = Y \overline{\psi}^{H} \quad (6)$$

$\hat{X}$ is recovered ($a \times b$)-dimensional high-dimensional channel information, Y is compressed ($a \times c$)-dimensional low-dimensional channel information, and $\overline{\psi}^{H}$ is a Hermitian matrix of a compression matrix, which is ($c \times b$)-dimensional ($c < b$).

In a possible implementation, when the feedback parameter in the information feedback condition includes the accumulative channel change quantity threshold and/or the accumulative measurement quantity threshold, the first information includes the current channel information obtained through measurement, the compressed information of the current channel information obtained through measurement, or the current wireless sensing measurement result obtained through measurement.

For example, as described in the foregoing specific implementation (2) to the specific implementation (4) in which the second wireless device determines, based on the feedback parameter in the information feedback condition and the channel information, whether the information feedback condition is met: When the feedback parameter in the information feedback condition includes the channel information variation threshold and the accumulative channel change quantity threshold, the first information includes the current channel information obtained through measurement, the compressed information of the current channel information obtained through measurement, or the current wireless sensing measurement result obtained through measurement. When the feedback parameter in the information feedback condition includes the channel information variation threshold and the accumulative measurement quantity threshold, the first information includes the current channel information obtained through measurement, the compressed information of the current channel information obtained through measurement, or the current wireless sensing measurement result obtained through measurement. When the feedback parameter in the information feedback condition includes the channel information variation threshold, the accumulative channel change quantity threshold, and the accumulative measurement quantity threshold, the first information includes the current channel information obtained through measurement, the compressed information of the current channel information obtained through measurement, or the current wireless sensing measurement result obtained through measurement.

Optionally, if the feedback parameter in the information feedback condition includes the accumulative channel change quantity threshold, when the accumulative quantity of channel changes reaches an accumulative channel change quantity threshold $N_{ch\_th}$, the first information may include channel information obtained through $N_{ch\_th}$ measurements, compressed information of channel information obtained through $N_{ch\_th}$ measurements, or a wireless sensing measurement result obtained through $N_{ch\_th}$ measurements.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result. When the second wireless device sends first information to the first wireless device, the first information is specifically sent to the first wireless device in the information feedback manner indicated by the third indication information. According to this possible implementation, the second wireless device may flexibly feed back information based on different application scenarios.

For example, if the information feedback manner indicated by the third indication information is feeding back a measurement packet, the second wireless device sends the measurement packet to the first wireless device after determining that the information feedback condition is met. If the information feedback manner indicated by the third indication information is feeding back channel information, the second wireless device sends the channel information to the first wireless device after determining that the information feedback condition is met. If the information feedback manner indicated by the third indication information is feeding back compressed information of the channel information, the second wireless device sends the compressed information of the channel information to the first wireless device after determining that the information feedback condition is met. If the information feedback manner indicated by the third indication information is feeding back a wireless sensing measurement result, the second wireless device sends the wireless sensing measurement result to the first wireless device after determining that the information feedback condition is met.

In another possible implementation, the first frame may alternatively not include the third indication information, and the second wireless device may feed back the measurement packet, the channel information, the compressed information of the channel information, or the wireless sensing measurement result by default.

In a possible implementation, the first frame is an NDPA frame, and the third indication information is located in a station information field of the NDPA frame. The third indication information is carried in the station information field, so that different information feedback manners are indicated for different second wireless devices.

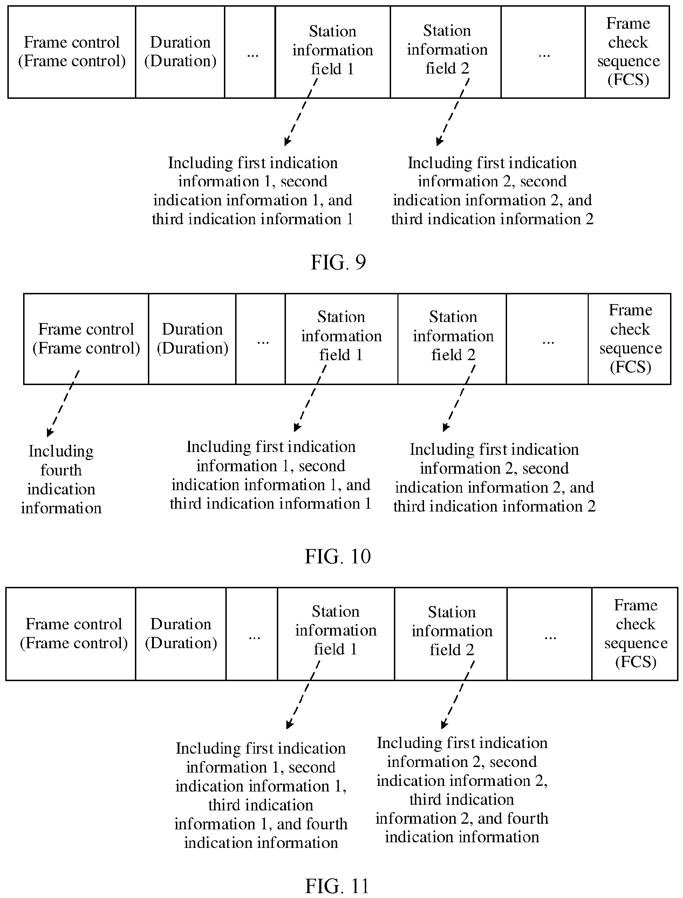

For example, the first wireless device is an access point, and the second wireless device is a station. As shown in FIG. 9, an NDPA frame includes a station information field 1 and a station information field 2. The station information field 1 carries first indication information 1, second indication information 1, and third indication information 1 for a station 1, and the station information field 2 carries first indication information 2, second indication information 2, and third indication information 2 for a station 2. The first indication information 1 and the first indication information 2 may be the same or different. The second indication information 1 and the second indication information 2 may be the same or different. The third indication information 1 and the third indication information 2 may be the same or different. When the first frame includes the first indication information, the second indication information, and the third indication information, the three pieces of indication information may be located in a same field, or may be located in different fields. FIG. 9 shows an example in which the first indication information, the second indication information, and the third indication information are located in the station information field. The indication information in FIG. 9 may include only the first indication information and the third indication information, or include only the second indication information and the third indication information.

Optionally, the third indication information may also be located in another field, for example, a frame control field of an NDPA frame.

In a possible implementation, the first frame further includes fourth indication information, and the fourth indication information indicates that the first frame is used to perform wireless sensing. After identifying the fourth indication information in the first frame, the second wireless device can determine that step 603 to step 606 need to be performed, so that the first wireless device can obtain the first information, and obtain a wireless sensing measurement result based on the first information.

Optionally, the first frame is the NDPA frame. The fourth indication information is located in a frame control field of the NDPA frame, or the fourth indication information is located in the station information field of the NDPA frame. The fourth indication information is carried in the frame control field of the NDPA frame, and all second wireless devices can directly read the frame control field to learn that wireless sensing needs to be performed, so that bits in the station information field indicates other information. The fourth indication information is carried in the station information field of the NDPA frame, so that an indication can be accurately performed for each second wireless device.

For example, FIG. 10 shows an example in which the fourth indication information is located in a frame control field of an NDPA frame. For another example, FIG. 11 shows an example in which the fourth indication information is located in a station information field of an NDPA frame.

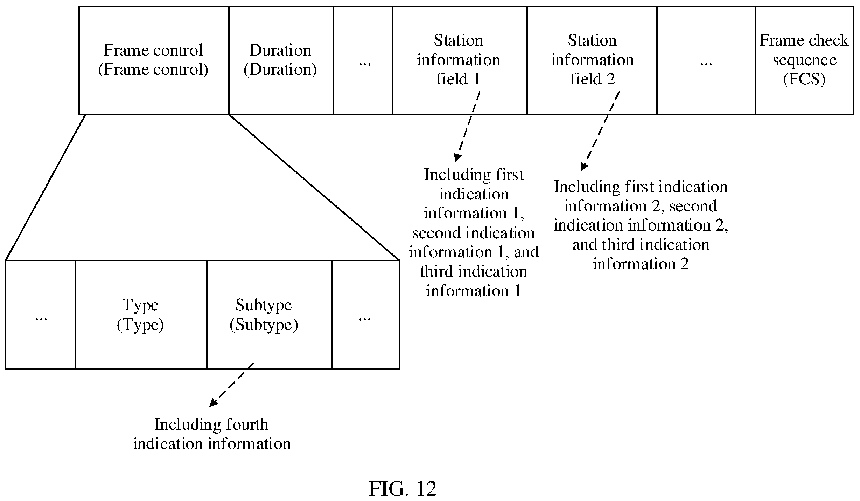

Optionally, that the fourth indication information is located in the frame control field of the NDPA frame is specifically: The fourth indication information is located in a subtype (subtype) subfield of the frame control field of the NDPA frame, for example, as shown in FIG. 12.

As shown in Table 5, currently, values 0000 and 0001 of a subtype subfield are reserved values. A value of a subtype subfield may be 0000 or 0001, to indicate that the first frame is used for wireless sensing.

**Table 5**

| Type value (type value) | Type description (type description) | Subtype value (subtype value) | Subtype description (subtype description) |
|---|---|---|---|
| 01 | Control (control) | 0000 and 0001 | Reserved |
| 01 | Control (control) | 0010 | Trigger |
| 01 | Control (control) | 0101 | VTH NDP announcement |

Optionally, if the fourth indication information is located in the station information field of the NDPA frame, the NDPA frame may be a ranging (ranging) NDPA frame. For example, the fourth indication information may be located in a reserved field in the station information field of the ranging (ranging) NDPA frame.

Optionally, if the fourth indication information is located in a station information field of the NDPA frame, a value of an association identifier (association identifier, AID) subfield in the station information field of the NDPA frame is a reserved value. The AID subfield indicates that the station information field includes the fourth indication information. In this optional manner, a value of the AID subfield in the station information field is set to a reserved value, to indicate that the station information field has a special meaning. In other words, the station information field includes the fourth indication information. For example, currently, reserved values of the AID subfield include 2007 to 2047. A value of the AID subfield in the station information field of the NDPA frame may be one of 2007 to 2047, to indicate that the station information field includes the fourth indication information. A reserved value of the AID subfield in this embodiment of this application may alternatively be a reserved value of the AID subfield in a standard later than 802.11be. In other words, in this possible implementation, a special user information field is separately used to carry the fourth indication information. This does not require a complex design of another field in the NDPA frame, and simplifies interpretation of the another field in the NDPA frame by a receiving end.

It can be learned that according to the method described in FIG. 6, the second wireless device can feed back information to the first wireless device only when the feedback condition is met. This helps reduce information exchange between the second wireless device and the first wireless device, and helps save channel resources.

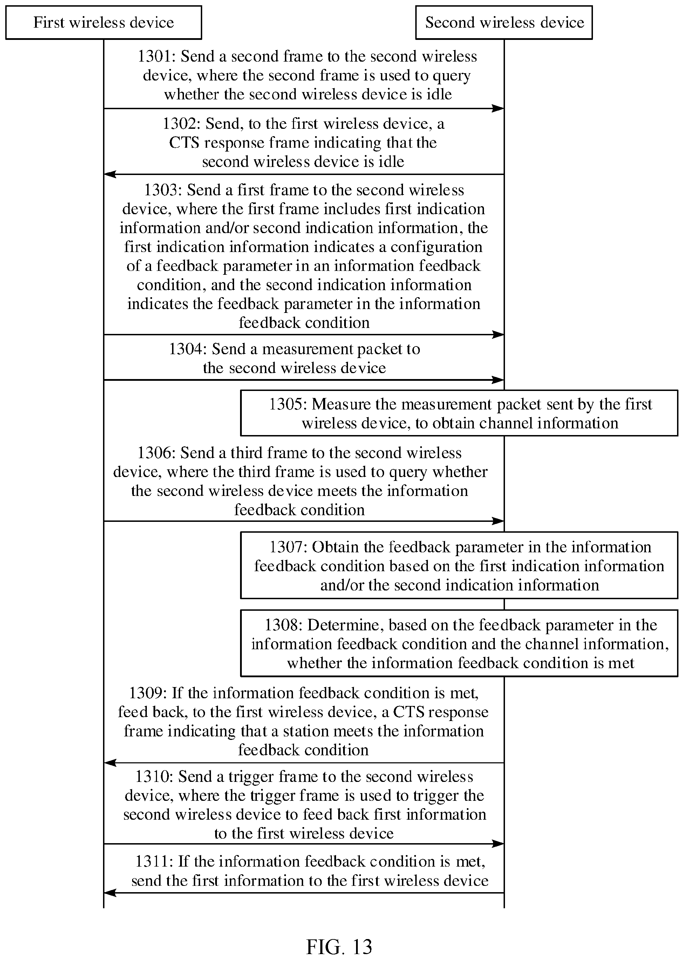

FIG. 13 is a schematic flowchart of another information reporting method according to an embodiment of this application. As shown in FIG. 13, the information reporting method includes the following step 1301 to step 1311. The method shown in FIG. 13 may be performed by a first wireless device and a second wireless device. Alternatively, the method shown in FIG. 13 may be performed by a chip in the first wireless device and a chip in the second wireless device. FIG. 13 is described by using an example in which the method is performed by the first wireless device and the second wireless device.

1301: The first wireless device sends a second frame to the second wireless device, where the second frame is used to query whether the second wireless device is idle.

In this embodiment of this application, the second frame may be a poll frame. The first wireless device may be scheduled to send the second frame to one or more second wireless devices, or the first wireless device may broadcast the second frame.

1302: The second wireless device sends, to the first wireless device, a CTS response frame indicating that the second wireless device is idle.

In this embodiment of this application, after receiving the second frame, the idle second wireless device sends a clear to send (clear to send, CTS) frame to make a response, and participates in channel measurement of a current round. Otherwise, the second wireless device does not make the response, and does not participate in the channel measurement of the current round.

In another possible implementation, the first wireless device may neither send the second frame to the second wireless device nor receive the CTS response frame sent by the second wireless device. The second wireless device may neither receive the second frame sent by the first wireless device nor send the CTS response frame to the first wireless device. All second wireless devices participate in channel measurement.

1303: The first wireless device sends a first frame to the second wireless device, where the first frame includes first indication information and/or second indication information, the first indication information indicates a configuration of a feedback parameter in an information feedback condition, and the second indication information indicates the feedback parameter in the information feedback condition.

In this embodiment of this application, the first wireless device sends the first frame to the second wireless device that feeds back the CTS response frame.

1304: The first wireless device sends a measurement packet to the second wireless device.

1305: The second wireless device measures the measurement packet sent by the first wireless device, to obtain channel information.

In this embodiment of this application, the idle second wireless device measures the measurement packet sent by the first wireless device, to obtain the channel information.

1306: The first wireless device sends a third frame to the second wireless device, where the third frame is used to query whether the second wireless device meets the information feedback condition.

In this embodiment of this application, after sending the measurement packet to the second wireless device, the first wireless device sends the third frame to the idle second wireless device, to query whether the second wireless device meets the information feedback condition. The third frame may be a poll frame.

1307: The second wireless device obtains the feedback parameter in the information feedback condition based on the first indication information and/or the second indication information.

1308: The second wireless device determines, based on the feedback parameter in the information feedback condition and the channel information, whether the information feedback condition is met.

In this embodiment of this application, the second wireless device may perform step 1307 and step 1308 after receiving the third frame, or the second wireless device may perform step 1307 and step 1308 before receiving the third frame.

1309: If the second wireless device meets the information feedback condition, the second wireless device feeds back, to the first wireless device, a CTS response frame indicating that the second wireless device meets the information feedback condition.

In this embodiment of this application, after the second wireless device receives the third frame, if the second wireless device meets the information feedback condition, the second wireless device feeds back, to the first wireless device, that CTS response frame indicating that the second wireless device meets the information feedback condition.

1310: The first wireless device sends a trigger frame to the second wireless device, where the trigger frame is used to trigger the second wireless device to feed back first information to the first wireless device.

In this embodiment of this application, after receiving the CTS response frame that is fed back by the second wireless device and that indicates that the second wireless device meets the information feedback condition, the first wireless device sends the trigger frame to the second wireless device that feeds back the CTS response frame, to trigger the second wireless device to feed back the first information to the first wireless device.

In a possible implementation, when the first information is the measurement packet, the trigger frame is a sounding (sounding) frame. Alternatively, when the first information is the channel information, compressed information of the channel information, or a wireless sensing result, the trigger frame is a report (report) frame.

In another possible implementation, the first wireless device does not need to send the third frame, receive the CTS response frame sent by the second wireless device, and send the trigger frame to the second wireless device. The second wireless device does not need to receive the third frame sent by the first wireless device, send the CTS response frame to the first wireless device, and receive the trigger frame sent by the first wireless device. The second wireless device may determine whether the information feedback condition is met, and report the first information when the information feedback condition is met.

1311: The second wireless device sends the first information to the first wireless device.

In this embodiment of this application, after receiving the trigger frame, the second wireless device sends the first information to the first wireless device.

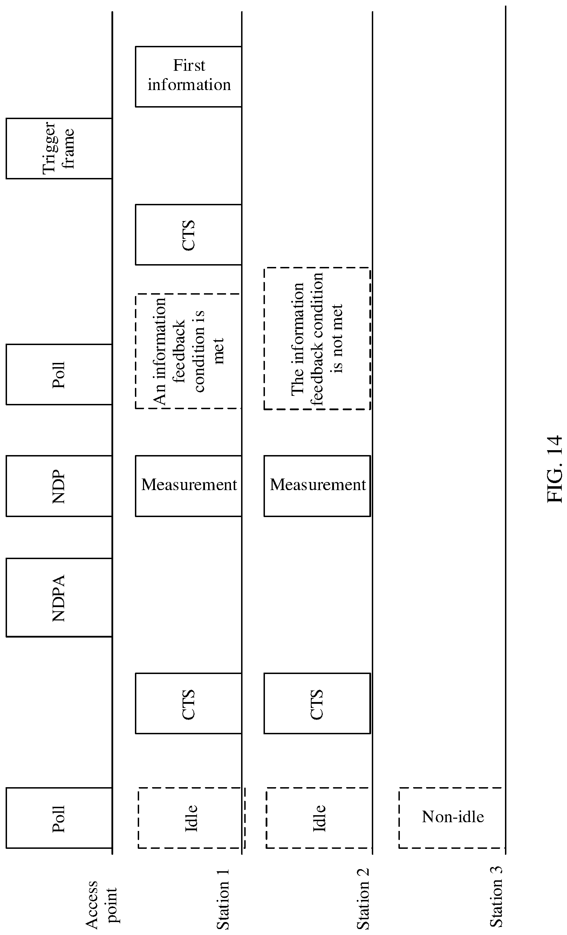

For example, the first wireless device is an access point, and the second wireless device is a station. As shown in FIG. 14, it is assumed that there are three stations: stations 1 to 3. The access point sends a poll frame to the stations 1 to 3. The station 1 and the station 2 are idle, and the station 3 is non-idle. Therefore, the station 1 and the station 2 send a CTS response frame to the access point. The station 3 does not send a CTS response frame to the access point. After receiving the CTS response frames sent by the station 1 and the station 2, the access point sends an NDPA frame to the station 1 and the station 2, to notify the station 1 and the station 2 that channel measurement is to be performed. As shown in FIG. 10, the NDPA frame includes the fourth indication information, first indication information 1, second indication information 1, and third indication information 1 for a station 1, and first indication information 2, second indication information 2, and third indication information 2 for a station 2. After sending the NDPA frame, the access point sends an NDP to the station 1 and the station 2. The station 1 measures the NDP to obtain channel information 1. The station 2 measures the NDP to obtain channel information 2. After sending the NDP, the access point sends a poll frame to the station 1 and the station 2 to query whether the station 1 and the station 2 meet the information feedback condition. The station 1 determines the feedback parameter in the information feedback condition based on the first indication information 1 and the second indication information 1, and determines, based on the feedback parameter in the information feedback condition and the channel information 1, whether the information feedback condition is met. If the condition is met, the station 1 feeds back a CTS response frame to the access point. Similarly, the station 2 determines the feedback parameter in the information feedback condition based on the first indication information 2 and the second indication information 2, and determines, based on the feedback parameter in the information feedback condition and the channel information 2, whether the information feedback condition is met. If the condition is not met, the station 2 does not feed back a CTS response frame to the access point. It is assumed that the access point receives the CTS response frame fed back by the station 1, the access point sends a trigger frame to the station 1. After receiving the trigger frame, the station 1 feeds back first information to the access point based on the information feedback manner indicated by the third indication information 1.

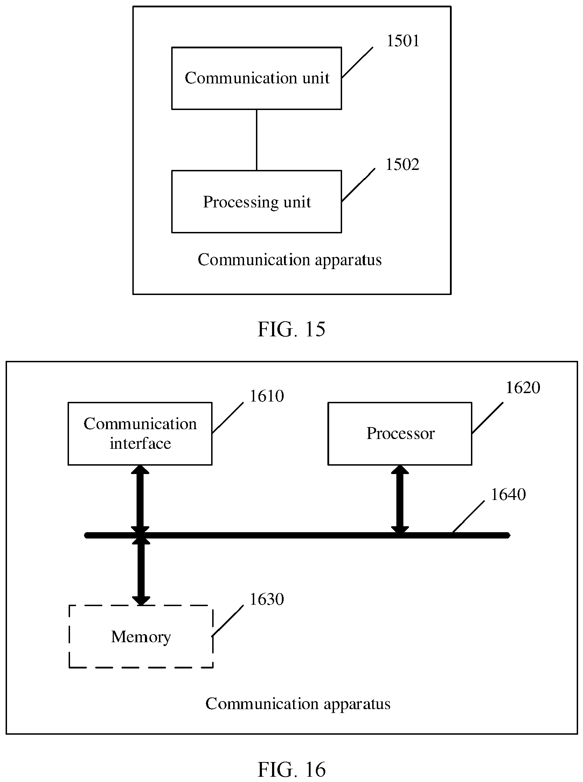

FIG. 15 is a schematic diagram of a structure of a communication apparatus according to an embodiment of this application. The communication apparatus shown in FIG. 15 may be configured to perform some or all functions of the first wireless device in the method embodiments described in FIG. 6 or FIG. 13. The apparatus may be the first wireless device, an apparatus in the first wireless device, or an apparatus that can be used together with the first wireless device. The communication apparatus may alternatively be a chip system. The communication apparatus shown in FIG. 15 may include a communication unit 1501 and a processing unit 1502. The processing unit 1502 is configured to process data. A receiving unit and a sending unit are integrated into the communication unit 1501. The communication unit 1501 may also be referred to as a transceiver unit. Alternatively, the communication unit 1501 may be split into a receiving unit and a sending unit. The processing unit 1502 and the communication unit 1501 below are similar, and details are not described below again.

The communication unit 1501 is configured to send a first frame to a second wireless device. The first frame includes first indication information and/or second indication information. The first indication information indicates a configuration of a feedback parameter in an information feedback condition. The second indication information indicates the feedback parameter in the information feedback condition. The feedback parameter in the information feedback condition is used by the second wireless device to determine whether the information feedback condition is met.

The communication unit 1501 is further configured to send a measurement packet to the second wireless device.

The communication unit 1501 is further configured to receive first information sent by the second wireless device when the second wireless device determines that the information feedback condition is met.

In a possible implementation, the first information includes one of the following information: the measurement packet, channel information, compressed information of the channel information, or a wireless sensing measurement result.

In a possible implementation, the first indication information indicates that the feedback parameter in the information feedback condition includes one or more of the following parameters: a channel information variation threshold, an accumulative channel change quantity threshold, or an accumulative measurement quantity threshold.

In a possible implementation, when the feedback parameter in the information feedback condition includes the accumulative channel change quantity threshold and/or the accumulative measurement quantity threshold, the first information includes the channel information, the compressed information of the channel information, or the wireless sensing measurement result.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result.

In a possible implementation, the first frame is a null data packet announcement NDPA frame, and the third indication information is located in a station information field of the NDPA frame.

In a possible implementation, the first frame is the null data packet announcement NDPA frame, and the first indication information and/or the second indication information are/is located in the station information field of the NDPA frame.

In a possible implementation, the first frame further includes fourth indication information, and the fourth indication information indicates that the first frame is used to perform wireless sensing.

In a possible implementation, the first frame is the null data packet announcement NDPA frame. The fourth indication information is located in a frame control field of the NDPA frame, or the fourth indication information is located in the station information field of the NDPA frame.

In a possible implementation, that the fourth indication information is located in the frame control field of the NDPA frame is specifically: The fourth indication information is located in a subtype subfield of the frame control field of the NDPA frame.

In a possible implementation, the fourth indication information is located in the station information field of the NDPA frame. The NDPA frame is a ranging (Ranging) NDPA frame. Alternatively, a value of an association identifier AID subfield in the station information field of the NDPA frame is a reserved value, and the AID subfield indicates that the station information field includes the fourth indication information.

In a possible implementation, the first information is the measurement packet or the channel information. The processing unit 1502 is configured to determine the wireless sensing measurement result based on the first information.

In a possible implementation, the first information is the compressed information of the channel information. The processing unit 1502 is configured to recover the compressed information to obtain the channel information. The processing unit 1502 is further configured to determine the wireless sensing measurement result based on the channel information.

In a possible implementation, a specific implementation in which the processing unit 1502 recovers the compressed information to obtain the channel information is as follows: The processing unit 1502 recovers the compressed information based on a machine learning model or a deep learning model, or according to a compressed sensing algorithm or a principal component analysis PCA algorithm, to obtain the channel information.

In a possible implementation, before the first wireless device sends the first frame to the second wireless device, the communication unit 1501 is further configured to send a second frame to the second wireless device. The second frame is used to query whether the second wireless device is idle. The communication unit 1501 is further configured to receive a clear to send CTS response frame that is sent by the second wireless device and that indicates that the second wireless device is idle.

In a possible implementation, before the first wireless device receives the first information sent by the second wireless device, the communication unit 1501 is further configured to: send a third frame to the second wireless device, where the third frame is used to query whether the second wireless device meets the information feedback condition; receive a clear to send CTS response frame that is sent by the second wireless device and that indicates that the second wireless device meets the information feedback condition; and send a trigger frame to the second wireless device. The trigger frame is used to trigger the second wireless device to feed back the first information to the first wireless device.

In a possible implementation, when the first information is the measurement packet, the trigger frame is a sounding (sounding) frame. Alternatively, when the first information is the channel information, the compressed information of the channel information, or the wireless sensing result, the trigger frame is a report (report) frame.

FIG. 15 is a schematic diagram of a structure of a communication apparatus according to an embodiment of this application. The communication apparatus shown in FIG. 15 may be configured to perform some or all functions of the second wireless device in the method embodiments described in FIG. 6 or FIG. 13. The apparatus may be the second wireless device, an apparatus in the second wireless device, or an apparatus that can be used together with the second wireless device. The communication apparatus may alternatively be a chip system. The communication apparatus shown in FIG. 15 may include a communication unit 1501 and a processing unit 1502.

The communication unit 1501 is configured to receive a first frame sent by a first wireless device. The first frame includes first indication information and/or second indication information. The first indication information indicates a configuration of a feedback parameter in an information feedback condition. The second indication information indicates a feedback parameter in the information feedback condition. The communication unit 1501 is further configured to measure a measurement packet sent by the first wireless device, to obtain channel information. The processing unit 1502 is configured to obtain the feedback parameter in the information feedback condition based on the first indication information and/or the second indication information. The processing unit 1502 is further configured to determine, based on the feedback parameter in the information feedback condition and the channel information, whether the information feedback condition is met. The communication unit 1501 is further configured to send the first information to the first wireless device when the information feedback condition is met.

In a possible implementation, the first information includes one of the following information: the measurement packet, channel information, compressed information of the channel information, or a wireless sensing measurement result obtained based on the channel information.

In a possible implementation, the first frame includes the first indication information. A specific implementation in which the processing unit 1502 obtains the feedback parameter in the information feedback condition based on the first indication information and/or the second indication information is as follows: The processing unit determines the configuration of the feedback parameter in the information feedback condition based on the first indication information. The processing unit obtains the feedback parameter in the information feedback condition based on the configuration of the feedback parameter in the information feedback condition.

In a possible implementation, the first frame further includes the first indication information and the second indication information. A specific implementation in which the processing unit 1502 obtains the feedback parameter in the information feedback condition based on the first indication information and/or the second indication information is as follows: The processing unit determines the configuration of the feedback parameter in the information feedback condition based on the first indication information. The processing unit reads, based on the configuration of the feedback parameter in the information feedback condition, the feedback parameter in the information feedback condition indicated by the second indication information.

In a possible implementation, the first indication information indicates that the feedback parameter in the information feedback condition includes one or more of the following parameters: a channel information variation threshold, an accumulative channel change quantity threshold, or an accumulative measurement quantity threshold.

In a possible implementation, when the feedback parameter in the information feedback condition includes the accumulative channel change quantity threshold and/or the accumulative measurement quantity threshold, the first information includes the channel information, the compressed information of the channel information, or the wireless sensing measurement result.

In a possible implementation, the first frame further includes third indication information. The third indication information indicates an information feedback manner of the second wireless device. The information feedback manner indicated by the third indication information is one of the following information feedback manners: feeding back the measurement packet, feeding back the channel information, feeding back the compressed information of the channel information, or feeding back the wireless sensing measurement result. A specific implementation in which the communication unit 1501 sends first information to the first wireless device includes: The communication unit 1501 sends the first information to the first wireless device in the information feedback manner indicated by the third indication information.

In a possible implementation, the first frame is a null data packet announcement NDPA frame, and the third indication information is located in a station information field of the NDPA frame.

In a possible implementation, the first frame is the null data packet announcement NDPA frame, and the first indication information and/or the second indication information are/is located in the station information field of the NDPA frame.

In a possible implementation, the first frame further includes fourth indication information, and the fourth indication information indicates that the first frame is used to perform wireless sensing.

In a possible implementation, the first frame is the null data packet announcement NDPA frame. The fourth indication information is located in a frame control field of the NDPA frame, or the fourth indication information is located in the station information field of the NDPA frame.

In a possible implementation, that the fourth indication information is located in the frame control field of the NDPA frame is specifically: The fourth indication information is located in a subtype subfield of the frame control field of the NDPA frame.

In a possible implementation, the fourth indication information is located in the station information field of the NDPA frame. The NDPA frame is a ranging (Ranging) NDPA frame. Alternatively, a value of an association identifier AID subfield in the station information field of the NDPA frame is a reserved value, and the AID subfield indicates that the station information field includes the fourth indication information.

In a possible implementation, the first information is the compressed information of the channel information, and the processing unit 1502 may be further configured to store the compressed information of the channel information.

In a possible implementation, the processing unit 1502 may be further configured to compress the channel information according to a compressed sensing algorithm or a principal component analysis PCA algorithm to obtain the compressed information of the channel information.

In a possible implementation, the first information is the measurement packet, the channel information, or the wireless sensing measurement result, and the processing unit 1502 is further configured to store the channel information.

In a possible implementation, before receiving the first frame sent by the first wireless device, the communication unit 1501 is further configured to receive a second frame sent by the first wireless device. The second frame is used to query whether the second wireless device is idle. The communication unit is configured to send, to the first wireless device, a clear to send CTS response frame indicating that the second wireless device is idle.

In a possible implementation, before sending the first information to the first wireless device, the communication unit 1501 is further configured to receive a third frame sent by the first wireless device. The third frame is used to query whether the second wireless device meets the information feedback condition. If the information feedback condition is met, the communication unit 1501 is further configured to feed back, to the first wireless device, a clear to send CTS response frame indicating that the second wireless device meets the information feedback condition. The communication unit 1501 is further configured to receive a trigger frame sent by the first wireless device. The trigger frame is used to trigger the second wireless device to feed back the first information to the first wireless device.

In a possible implementation, when the first information is the measurement packet, the trigger frame is a sounding (sounding) frame. Alternatively, when the first information is the channel information, the compressed information of the channel information, or the wireless sensing result, the trigger frame is a report (report) frame.

In a possible implementation, the first indication information indicates that the feedback parameter in the information feedback condition includes the channel information variation threshold. A specific implementation in which the processing unit 1502 determines, based on the feedback parameter in the information feedback condition and the channel information, whether the information feedback condition is met is as follows: The processing unit determines the channel information variation based on the channel information. The processing unit determines, based on the channel information variation and the channel information variation threshold, whether the information feedback condition is met.

In a possible implementation, the feedback parameter in the information feedback condition includes the channel information variation threshold and the accumulative channel change quantity threshold. A specific implementation in which the processing unit 1502 determines, based on the feedback parameter in the information feedback condition and the channel information, whether the information feedback condition is met is as follows: The second wireless device determines a channel information variation based on the channel information. The second wireless device determines an accumulative quantity of channel changes based on the channel information variation and the channel information variation threshold. The second wireless device determines, based on the accumulative quantity of channel changes and the accumulative channel change quantity threshold, whether the information feedback condition is met.

In a possible implementation, the feedback parameter in the information feedback condition includes the channel information variation threshold and the accumulative measurement quantity threshold. A specific implementation in which the processing unit 1502 determines, based on the feedback parameter in the information feedback condition and the channel information, whether the information feedback condition is met is as follows: The second wireless device determines an accumulative quantity of measurements of the measurement packet. The second wireless device determines a channel information variation based on the channel information. The second wireless device determines, based on the channel information variation, the accumulative quantity of measurements, the channel information variation threshold, and the accumulative measurement quantity threshold, whether the information feedback condition is met.

In a possible implementation, the feedback parameter in the information feedback condition includes the channel information variation threshold, the accumulative channel change quantity threshold, and the accumulative measurement quantity threshold. A specific implementation in which the processing unit 1502 determines, based on the feedback parameter in the information feedback condition and the channel information, whether the information feedback condition is met is as follows: The second wireless device determines a channel information variation based on the channel information. The second wireless device determines an accumulative quantity of channel changes based on the channel information variation and the channel information variation threshold. The second wireless device determines an accumulative quantity of measurements of the measurement packet. The second wireless device determines, based on the accumulative quantity of channel changes, the accumulative quantity of measurements, the accumulative channel change quantity threshold, and the accumulative measurement quantity threshold, whether the information feedback condition is met.

FIG. 16 shows a communication apparatus 160 according to an embodiment of this application. The communication apparatus 160 is configured to implement functions of the first wireless device in FIG. 6 or FIG. 9. The apparatus may be the first wireless device or an apparatus used for the first wireless device. The apparatus used for the first wireless device may be a chip system or a chip in the first wireless device. The chip system may include a chip, or may include a chip and another discrete component.

Alternatively, the communication apparatus 160 is configured to implement a function of the second wireless device in FIG. 6 or FIG. 9. The apparatus may be the second wireless device or an apparatus used for the second wireless device. The apparatus used for the second wireless device may be a chip system or a chip in the second wireless device.

The communication apparatus 160 includes at least one processor 1620, configured to implement a data processing function of the first wireless device or the second wireless device in the methods provided in embodiments of this application. The apparatus 160 may further include a communication interface 1610, configured to implement receiving and sending operations of the first wireless device or the second wireless device in the methods provided in embodiments of this application. In this embodiment of this application, the communication interface may be a transceiver, a circuit, a bus, a module, or a communication interface of another type, and is configured to communicate with another device by using a transmission medium. For example, the communication interface 1610 is used by an apparatus in the apparatus 160 to communicate with another device. The processor 1620 receives and sends data through the communication interface 1610, and is configured to implement the method shown in FIG. 6 or FIG. 9 in the foregoing method embodiments.

The apparatus 160 may further include at least one memory 1630, configured to store program instructions and/or data. The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. The processor 1620 may cooperate with the memory 1630. The processor 1620 may execute the program instructions stored in the memory 1630. At least one of the at least one memory may be included in the processor.

After the apparatus 160 is powered on, the processor 1620 can read a software program in the memory 1630, interpret and execute instructions of the software program, and process data of the software program. When data needs to be sent wirelessly, the processor 1620 performs baseband processing on the to-be-sent data, and then outputs a baseband signal to a radio frequency circuit (not shown in the figure). The radio frequency circuit performs radio frequency processing on the baseband signal, and then sends, by using the antenna, a radio frequency signal in an electromagnetic wave form. When data is sent to the apparatus 160, the radio frequency circuit receives a radio frequency signal through the antenna, converts the radio frequency signal into a baseband signal, and outputs the baseband signal to the processor 1620. The processor 1620 converts the baseband signal into data and processes the data.

In another implementation, the radio frequency circuit and the antenna may be disposed independent of the processor 1620 that performs baseband processing. For example, in a distributed scenario, the radio frequency circuit and the antenna may be disposed remotely and independent of the communication apparatus.

A specific connection medium between the communication interface 1610, the processor 1620, and the memory 1630 is not limited in this embodiment of this application. In this embodiment of this application, the memory 1630, the processor 1620, and the communication interface 1610 are connected to each other through a bus 1640 in FIG. 16. The bus is represented by using a bold line in FIG. 16. A connection manner between other components is only an example for descriptions, and is not limited thereto. The bus may be classified into an address bus, a data bus, a control bus, and the like. For ease of representation, only one bold line is for representing the bus in FIG. 16, but this does not mean that there is only one bus or only one type of bus.

When the apparatus 160 is specifically an apparatus used in the first wireless device or the second wireless device, for example, when the apparatus 160 is specifically a chip or a chip system, the communication interface 1610 may output or receive a baseband signal. When the apparatus 160 is specifically the first wireless device or the second wireless device, the communication interface 1610 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, operations, and logical block diagrams disclosed in this embodiment of this application. The general-purpose processor may be a microprocessor or any conventional processor or the like. The operations in the methods disclosed with reference to embodiments of this application may be directly performed and completed by a hardware processor, or may be performed and completed by a combination of hardware in the processor and a software module.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

It should be noted that, for brief description, the foregoing method embodiment is represented as a combination of a series of actions. However, persons skilled in the art should understand that this application is not limited to the described order of the actions, because according to this application, some operations may be performed in other orders or simultaneously. It should be further appreciated by persons skilled in the art that embodiments described in this specification all belong to preferred embodiments, and the involved actions and modules are not necessarily required by this application.

Cross-reference may be made to descriptions of the embodiments provided in this application, and the descriptions of embodiments have different focuses. For a part not described in detail in an embodiment, refer to related descriptions of another embodiment. For ease of description and brevity, for functions of the apparatuses and devices provided in embodiments of this application and operations performed by the apparatuses and devices, refer to related descriptions of the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. An information reporting method, wherein the method comprises:

   sending, by a first wireless device, a first frame to a second wireless device, wherein the first frame comprises first indication information and/or second indication information, the first indication information indicates a configuration of a feedback parameter in an information feedback condition, the second indication information indicates the feedback parameter in the information feedback condition, and the feedback parameter in the information feedback condition is used by the second wireless device to determine whether the information feedback condition is met;
   sending, by the first wireless device, a measurement packet to the second wireless device; and
   receiving, by the first wireless device, first information sent by the second wireless device when the second wireless device determines that the information feedback condition is met.

2. The method according to claim 1, wherein the first information comprises one of the following information: a measurement packet, channel information, compressed information of the channel information, or a wireless sensing measurement result.

3. The method according to claim 1, wherein the first indication information indicates that the feedback parameter in the information feedback condition comprises one or more of the following parameters: a channel information variation threshold, an accumulative channel change quantity threshold, or an accumulative measurement quantity threshold.

4. The method according to any one of claims 1 to 3, wherein when the feedback parameter in the information feedback condition comprises the accumulative channel change quantity threshold and/or the accumulative measurement quantity threshold, the first information comprises the channel information, the compressed information of the channel information, or the wireless sensing measurement result.

5. The method according to any one of claims 1 to 4, wherein the first frame further comprises third indication information, the third indication information indicates an information feedback manner of the second wireless device, and the information feedback manner indicated by the third indication information is one of the following information feedback manners: feeding back the measurement packet, feeding back the channel information, feeding back the compressed information of the channel information, or feeding back the wireless sensing measurement result.

6. The method according to claim 5, wherein the first frame is a null data packet announcement NDPA frame, and the third indication information is located in a station information field of the NDPA frame.

7. The method according to any one of claims 1 to 6, wherein the first frame is the null data packet announcement NDPA frame, and the first indication information and/or the second indication information are/is located in the station information field of the NDPA frame.

8. The method according to any one of claims 1 to 7, wherein the first frame further comprises fourth indication information, and the fourth indication information indicates that the first frame is used to perform wireless sensing.

9. The method according to any one of claims 1 to 8, wherein the first information is the measurement packet or the channel information, and the method further comprises:
   determining, by the first wireless device, the wireless sensing measurement result based on the first information.

10. The method according to any one of claims 1 to 8, wherein the first information is the compressed information of the channel information, and the method further comprises:

    recovering, by the first wireless device, the compressed information to obtain the channel information; and
    determining, by the first wireless device, the wireless sensing measurement result based on the channel information.

11. The method according to claim 10, wherein the recovering, by the first wireless device, the compressed information to obtain the channel information comprises:
    recovering, by the first wireless device, the compressed information based on a machine learning model or a deep learning model, or according to a compressed sensing algorithm or a principal component analysis PCA algorithm, to obtain the channel information.

12. An information reporting method, wherein the method comprises:

receiving, by a second wireless device, a first frame sent by a first wireless device, wherein the first frame comprises first indication information and/or second indication information, the first indication information indicates a configuration of a feedback parameter in an information feedback condition, and the second indication information indicates the feedback parameter in the information feedback condition;

measuring, by the second wireless device, a measurement packet sent by the first wireless device, to obtain channel information;

obtaining, by the second wireless device, the feedback parameter in the information feedback condition based on the first indication information and/or the second indication information;

determining, by the second wireless device based on the feedback parameter in the information feedback condition and the channel information, whether the information feedback condition is met; and

if yes, sending, by the second wireless device, first information to the first wireless device.

13. The method according to claim 12, wherein the first information comprises one of the following information: a measurement packet, the channel information, compressed information of the channel information, or a wireless sensing measurement result obtained based on the channel information.

14. The method according to claim 12 or 13, wherein the first frame comprises the first indication information, and the obtaining, by the second wireless device, the feedback parameter in the information feedback condition based on the first indication information and/or the second indication information comprises:

determining, by the second wireless device, the configuration of the feedback parameter in the information feedback condition based on the first indication information; and

obtaining, by the second wireless device, the feedback parameter in the information feedback condition based on the configuration of the feedback parameter in the information feedback condition.

15. The method according to claim 12 or 13, wherein the first frame further comprises the first indication information and the second indication information, and the obtaining, by the second wireless device, the feedback parameter in the information feedback condition based on the first indication information and/or the second indication information comprises:

determining, by the second wireless device, the configuration of the feedback parameter in the information feedback condition based on the first indication information; and

reading, by the second wireless device based on the configuration of the feedback parameter in the information feedback condition, the feedback parameter in the information feedback condition indicated by the second indication information.

16. The method according to any one of claims 12 to 15, wherein the first indication information indicates that the feedback parameter in the information feedback condition comprises one or more of the following parameters: a channel information variation threshold, an accumulative channel change quantity threshold, or an accumulative measurement quantity threshold.

17. The method according to any one of claims 12 to 16, wherein when the feedback parameter in the information feedback condition comprises the accumulative channel change quantity threshold and/or the accumulative measurement quantity threshold, the first information comprises the channel information, the compressed information of the channel information, or the wireless sensing measurement result.

18. The method according to any one of claims 12 to 17, wherein the first frame further comprises third indication information, the third indication information indicates an information feedback manner of the second wireless device, and the information feedback manner indicated by the third indication information is one of the following information feedback manners: feeding back the measurement packet, feeding back the channel information, feeding back the compressed information of the channel information, or feeding back the wireless sensing measurement result.

the sending, by the second wireless device, first information to the first wireless device comprises:

sending, by the second wireless device, the first information to the first wireless device based on the information feedback manner indicated by the third indication information.

19. The method according to claim 18, wherein the first frame is a null data packet announcement NDPA frame, and the third indication information is located in a station information field of the NDPA frame.

20. The method according to any one of claims 12 to 19, wherein the first frame is the null data packet announcement NDPA frame, and the first indication information and/or the second indication information are/is located in the station information field of the NDPA frame.

21. The method according to any one of claims 12 to 20, wherein the first frame further comprises fourth indication information, and the fourth indication information indicates that the first frame is used to perform wireless sensing.

22. The method according to any one of claims 12 to 21, wherein the first information is the compressed information of the channel information, and the method further comprises:
storing, by the second wireless device, the compressed information of the channel information.

23. The method according to any one of claims 12 to 22, wherein the method further comprises:
compressing the channel information according to a compressed sensing algorithm or a principal component analysis PCA algorithm to obtain the compressed information of the channel information.

24. The method according to any one of claims 12 to 21, wherein the first information is the measurement packet, the channel information, or the wireless sensing measurement result, and the method further comprises:
storing, by the second wireless device, the channel information.

25. The method according to any one of claims 12 to 24, wherein the first indication information indicates that the feedback parameter in the information feedback condition comprises the channel information variation threshold, and the determining, by the second wireless device based on the feedback parameter in the information feedback condition and the channel information, whether the information feedback condition is met comprises:

    determining, by the second wireless device, a channel information variation based on the channel information; and
    determining, by the second wireless device based on the channel information variation and the channel information variation threshold, whether the information feedback condition is met.

26. The method according to any one of claims 12 to 24, wherein the feedback parameter in the information feedback condition comprises the channel information variation threshold and the accumulative channel change quantity threshold, and the determining, by the second wireless device based on the feedback parameter in the information feedback condition and the channel information, whether the information feedback condition is met comprises:

    determining, by the second wireless device, a channel information variation based on the channel information;
    determining, by the second wireless device, an accumulative quantity of channel changes based on the channel information variation and the channel information variation threshold; and
    determining, by the second wireless device based on the accumulative quantity of channel changes and the accumulative channel change quantity threshold, whether the information feedback condition is met.

27. The method according to any one of claims 12 to 24, wherein the feedback parameter in the information feedback condition comprises the channel information variation threshold and the accumulative measurement quantity threshold, and the determining, by the second wireless device based on the feedback parameter in the information feedback condition and the channel information, whether the information feedback condition is met comprises:

    determining, by the second wireless device, an accumulative quantity of measurements of the measurement packet;
    determining, by the second wireless device, a channel information variation based on the channel information; and
    determining, by the second wireless device based on the channel information variation, the accumulative quantity of measurements, the channel information variation threshold, and the accumulative measurement quantity threshold, whether the information feedback condition is met.

28. The method according to any one of claims 12 to 24, wherein the feedback parameter in the information feedback condition comprises the channel information variation threshold, the accumulative channel change quantity threshold,

and the accumulative measurement quantity threshold, and the determining, by the second wireless device based on the feedback parameter in the information feedback condition and the channel information, whether the information feedback condition is met comprises:

determining, by the second wireless device, a channel information variation based on the channel information; determining, by the second wireless device, an accumulative quantity of channel changes based on the channel information variation and the channel information variation threshold; determining, by the second wireless device, an accumulative quantity of measurements of the measurement packet; and determining, by the second wireless device based on the accumulative quantity of channel changes, the accumulative quantity of measurements, the accumulative channel change quantity threshold, and the accumulative measurement quantity threshold, whether the information feedback condition is met.

29. A communication apparatus, wherein the communication apparatus comprises units configured to implement the method according to any one of claims 1 to 11, or the communication apparatus comprises units configured to implement the method according to any one of claims 12 to 28.

30. A communication apparatus, comprising a processor and a communication interface, wherein
the communication interface is configured to communicate with another communication apparatus, and the processor is configured to run a program, so that the communication apparatus implements the method according to any one of claims 1 to 11, or the communication apparatus implements the method according to any one of claims 12 to 28.

31. A communication system, wherein the communication system comprises a first wireless device and a second wireless device, the first wireless device is configured to perform the method according to any one of claims 1 to 11, and the second wireless device is configured to perform the method according to any one of claims 12 to 28.

32. A computer-readable storage medium, wherein the computer-readable storage medium stores computer-executable instructions, and when the computer-executable instructions are invoked by a computer, the computer is enable to perform the method according to any one of claims 1 to 11, or when the computer-executable instructions are invoked by the computer, the computer is enabled to perform the method according to any one of claims 12 to 28.

33. A computer program product, wherein the computer program product comprises computer program code, and when the computer program code is run by a computer, the computer is enabled to perform:
the method according to any one of claims 1 to 11, or the method according to any one of claims 12 to 28.

First wireless
device
101

Detected target
103

Direct signal
104

Reflected signal
105

Second wireless
device
102

FIG. 1

FIG. 2

FIG. 3

FIG. 4

FIG. 5

```
┌─────────────────────────┐          ┌─────────────────────────┐
│   First wireless device │          │  Second wireless device │
└─────────────────────────┘          └─────────────────────────┘
```

601: Send a first frame to the second wireless device, where the first frame includes first indication information and/or second indication information, the first indication information indicates a configuration of a feedback parameter in an information feedback condition, and the second indication information indicates the feedback parameter in the information feedback condition

602: Send a measurement packet to the second wireless device

603: Measure the measurement packet sent by the first wireless device, to obtain channel information

604: Obtain the feedback parameter in the information feedback condition based on the first indication information and/or the second indication information

605: Determine, based on the feedback parameter in the information feedback condition and the channel information, whether the information feedback condition is met

606: If the information feedback condition is met, send first information to the first wireless device

FIG. 6

| Frame control (Frame control) | Duration (Duration) | ... | Station information field 1 | Station information field 2 | ... | Frame check sequence (FCS) |
|---|---|---|---|---|---|---|

Including first indication information 1 and second indication information 1

Including first indication information 2 and second indication information 2

FIG. 7

| Frame control (Frame control) | Duration (Duration) | ... | Station information field 1 | Station information field 2 | ... | Frame check sequence (FCS) |
|---|---|---|---|---|---|---|

| Association identifier (AID) | Subfield 1 | Subfield 2 | Subfield 3 | Subfield 4 |
|---|---|---|---|---|

Including first indication information 2 and second indication information 2

Indicating that a feedback parameter in an information feedback condition includes a channel information variation threshold and an accumulative channel change quantity threshold

Indicating the channel information variation threshold

Indicating the accumulative channel change quantity threshold

Indicating an accumulative measurement quantity threshold

FIG. 8

EP 4 258 576 A1

| Frame control (Frame control) | Duration (Duration) | ... | Station information field 1 | Station information field 2 | ... | Frame check sequence (FCS) |
|---|---|---|---|---|---|---|

Including first indication information 1, second indication information 1, and third indication information 1

Including first indication information 2, second indication information 2, and third indication information 2

FIG. 9

| Frame control (Frame control) | Duration (Duration) | ... | Station information field 1 | Station information field 2 | ... | Frame check sequence (FCS) |
|---|---|---|---|---|---|---|

Including fourth indication information

Including first indication information 1, second indication information 1, and third indication information 1

Including first indication information 2, second indication information 2, and third indication information 2

FIG. 10

| Frame control (Frame control) | Duration (Duration) | ... | Station information field 1 | Station information field 2 | ... | Frame check sequence (FCS) |
|---|---|---|---|---|---|---|

Including first indication information 1, second indication information 1, third indication information 1, and fourth indication information

Including first indication information 2, second indication information 2, third indication information 2, and fourth indication information

FIG. 11

| Frame control (Frame control) | Duration (Duration) | ... | Station information field 1 | Station information field 2 | ... | Frame check sequence (FCS) |
|---|---|---|---|---|---|---|

| ... | Type (Type) | Subtype (Subtype) | ... |
|---|---|---|---|

Including first indication information 1, second indication information 1, and third indication information 1

Including first indication information 2, second indication information 2, and third indication information 2

Including fourth indication information

FIG. 12

EP 4 258 576 A1

| First wireless device | Second wireless device |
|---|---|

1301: Send a second frame to the second wireless device, where the second frame is used to query whether the second wireless device is idle →

1302: Send, to the first wireless device, a CTS response frame indicating that the second wireless device is idle ←

1303: Send a first frame to the second wireless device, where the first frame includes first indication information and/or second indication information, the first indication information indicates a configuration of a feedback parameter in an information feedback condition, and the second indication information indicates the feedback parameter in the information feedback condition →

1304: Send a measurement packet to the second wireless device →

1305: Measure the measurement packet sent by the first wireless device, to obtain channel information

1306: Send a third frame to the second wireless device, where the third frame is used to query whether the second wireless device meets the information feedback condition →

1307: Obtain the feedback parameter in the information feedback condition based on the first indication information and/or the second indication information

1308: Determine, based on the feedback parameter in the information feedback condition and the channel information, whether the information feedback condition is met

1309: If the information feedback condition is met, feed back, to the first wireless device, a CTS response frame indicating that a station meets the information feedback condition ←

1310: Send a trigger frame to the second wireless device, where the trigger frame is used to trigger the second wireless device to feed back first information to the first wireless device →

1311: If the information feedback condition is met, send the first information to the first wireless device ←

FIG. 13

EP 4 258 576 A1

| Access point | Poll | | NDPA | NDP | Poll | | Trigger frame |
|---|---|---|---|---|---|---|---|
| Station 1 | Idle | CTS | | Measurement | An information feedback condition is met | CTS | First information |
| Station 2 | Idle | CTS | | Measurement | The information feedback condition is not met | | |
| Station 3 | Non-idle | | | | | | |

FIG. 14

FIG. 15

FIG. 16

### INTERNATIONAL SEARCH REPORT

| International application No. |
| --- |
| **PCT/CN2021/137193** |

**A. CLASSIFICATION OF SUBJECT MATTER**

H04L 1/00(2006.01)i; H04L 5/00(2006.01)i

According to International Patent Classification (IPC) or to both national classification and IPC

**B. FIELDS SEARCHED**

Minimum documentation searched (classification system followed by classification symbols)

H04L 1/-; H04L 5/-

Documentation searched other than minimum documentation to the extent that such documents are included in the fields searched

Electronic data base consulted during the international search (name of data base and, where practicable, search terms used)

CNTXT; CNKI; CNABS; BAIDU: ndpa, csi, 感知, 探测, 信道, 反馈, 信道, 阈值, 条件, 压缩, 雷达, wifi; VEN; ENTXT; USTXT; WOTXT; BING: ndpa, csi, sense, channel, feedback, threshold, compressive, radar, wifi

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113115415 A (HUAWEI TECHNOLOGIES CO., LTD.) 13 July 2021 (2021-07-13) description, paragraphs 40-212 | 1-4, 12-13, 29-33 |
| X | CN 103141044 A (QUALCOMM INC.) 05 June 2013 (2013-06-05) description paragraphs 70-102 | 1-33 |
| A | CN 106454930 A (ZTE CORPORATION) 22 February 2017 (2017-02-22) entire document | 1-33 |
| A | EP 1509011 A2 (SAMSUNG ELECTRONICS CO., LTD.) 23 February 2005 (2005-02-23) entire document | 1-33 |
| A | CN 108271206 A (SUN YAT-SEN UNIVERSITY) 10 July 2018 (2018-07-10) entire document | 1-33 |
| A | CN 107409012 A (QUALCOMM INC.) 28 November 2017 (2017-11-28) entire document | 1-33 |
| A | WO 2020253492 A1 (HUAWEI TECHNOLOGIES CO., LTD.) 24 December 2020 (2020-12-24) entire document | 1-33 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 February 2022** | **10 March 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2021/137193**

| Patent document cited in search report | | | Publication date (day/month/year) | Patent family member(s) | | | Publication date (day/month/year) |
|---|---|---|---|---|---|---|---|
| CN | 113115415 | A | 13 July 2021 | WO | 2021139736 | A1 | 15 July 2021 |
| CN | 103141044 | A | 05 June 2013 | KR | 20130079567 | A | 10 July 2013 |
| | | | | KR | 101520781 | B1 | 15 May 2015 |
| | | | | EP | 2622769 | A1 | 07 August 2013 |
| | | | | EP | 2622769 | B1 | 21 April 2021 |
| | | | | ES | 2867475 | T3 | 20 October 2021 |
| | | | | BR | 112013007574 | A2 | 02 August 2016 |
| | | | | WO | 2012044862 | A1 | 05 April 2012 |
| | | | | US | 2012250618 | A1 | 04 October 2012 |
| | | | | US | 9813135 | B2 | 07 November 2017 |
| | | | | JP | 2013545338 | A | 19 December 2013 |
| | | | | JP | 5778286 | B2 | 16 September 2015 |
| CN | 106454930 | A | 22 February 2017 | WO | 2017097115 | A1 | 15 June 2017 |
| EP | 1509011 | A2 | 23 February 2005 | CN | 1604687 | A | 06 April 2005 |
| | | | | JP | 2005065298 | A | 10 March 2005 |
| | | | | JP | 4243229 | B2 | 25 March 2009 |
| | | | | EP | 1509011 | A3 | 19 January 2011 |
| | | | | US | 2005078651 | A1 | 14 April 2005 |
| | | | | KR | 20050018540 | A | 23 February 2005 |
| | | | | IN | 200400486 | I2 | 19 May 2006 |
| CN | 108271206 | A | 10 July 2018 | CN | 108271206 | B | 01 December 2020 |
| CN | 107409012 | A | 28 November 2017 | AU | 2016226456 | A1 | 10 August 2017 |
| | | | | BR | 112017018864 | A2 | 24 April 2018 |
| | | | | JP | 2018511985 | A | 26 April 2018 |
| | | | | JP | 6513820 | B2 | 15 May 2019 |
| | | | | WO | 2016140872 | A1 | 09 September 2016 |
| | | | | KR | 20170125336 | A | 14 November 2017 |
| | | | | KR | 102007519 | B1 | 05 August 2019 |
| | | | | EP | 3266140 | A1 | 10 January 2018 |
| | | | | US | 2016262051 | A1 | 08 September 2016 |
| | | | | US | 10111132 | B2 | 23 October 2018 |
| WO | 2020253492 | A1 | 24 December 2020 | CN | 112118034 | A | 22 December 2020 |

Form PCT/ISA/210 (patent family annex) (January 2015)

**EP 4 258 576 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011588889